# EUROPEAN PATENT APPLICATION

(11) **EP 4 823 214 A1**
(43) Date of publication of application: **14.10.2026**
(21) Application number: 24900907.7
(22) Date of filing: 14.11.2024
(51) Int. Cl.: H04W 72/232, H04W 72/231, H04W 72/1273, H04W 72/0446, H04W 72/53, H04L 5/00, H04W 84/06

(54) **METHOD, USER EQUIPMENT, PROCESSING DEVICE AND STORAGE MEDIUM FOR RECEIVING DOWNLINK SIGNAL, AND METHOD, BASE STATION, PROCESSING DEVICE AND STORAGE MEDIUM FOR TRANSMITTING DOWNLINK SIGNAL**

(30) Priority: 04.12.2023 KR 20230173728
(71) Applicant: Hyundai Mobis Co., Ltd., Gangnam-gu Seoul 06141 (KR)
(72) Inventor: KIM, Tae Hyoung, Yongin-si, Gyeonggi-do 16891 (KR)
(74) Representative: Jung, Minkyu
(86) International application number: PCT/KR2024/017955
(87) International publication number: WO 2025/121720

(57) **Abstract**

This UE can receive a TCI configuration related to N number of TCI-states and receive an activation command for M TCI-states from among the N number of TCI-states The TCI-states can be divided into G number of TCI groups. The UE can receive DCI for scheduling a PDSCH. The DCI can include TCI group information related to one of the G number of TCI groups. The UE can determine the TCI-state for the PDSCH from among the TCI-states in the TCI group indicated by the TCI group information in the DCI, and receive the PDSCH on the basis of the determined TCI-state.

## Description

### TECHNICAL FIELD

The present specification relates to a wireless communication system.

### BACKGROUND

Various devices and technologies, such as machine-to-machine (M2M) communication, machine-type communication (MTC), and a smartphone and a tablet PC that require high data transmission rates, are emerging and becoming widespread. Accordingly, the amount of data required to be processed on cellular networks is rapidly increasing. To meet this rapidly increasing data processing demand, technologies, such as carrier aggregation and cognitive radio, for efficiently using more frequency bands, a multi-antenna technology, a multi-base station (BS) cooperation technology, and the like for increasing data capacity transmitted within limited frequencies are being developed.

Recently, to provide wireless communication services in areas in which terrestrial connectivity is technically difficult or costly through terrestrial networks (TNs), supporting wireless communication services through a non-terrestrial network (NTN) has been considered.

### DISCLOSURE

### TECHNICAL PROBLEM

There is a need for a scheme to accurately and efficiently provide wireless communication signals to a UE (UE) through airborne platforms or space.

Objects of the present specification are not limited to the above object, and other objects that are not described will be able to be clearly understood by those skilled in the art to which the present specification pertains based on the following description.

### TECHNICAL SOLUTION

According to an aspect of the present specification there is provided a method of receiving, by a UE, a downlink signal in a wireless communication system for supporting a non-terrestrial network (NTN). The method may include receiving a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information, receiving an activation command for M TCI-states among the N TCI-states, the TCI-states being divided into G TCI groups and M being a positive integer less than N, detecting a physical downlink control channel (PDCCH) carrying downlink control information (DCI) scheduling the PDSCH, the DCI including TCI group information on one of the G TCI groups, determining a TCI-state for the PDSCH among the TCI-states within the TCI group indicated by the TCI group information within the DCI, and receiving the PDSCH based on the determined TCI-state.

According to another aspect of the present specification there is provided a user equipment for receiving a downlink signal in a wireless communication system for supporting a non-terrestrial network (NTN). The UE may include at least one transceiver, at least one processor, and at least one computer memory which is operatively connected to the at least one processor and stores instructions that, when executed, cause the at least one processor to perform operations, the operations may include receiving a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information, receiving an activation command for M TCI-states among the N TCI-states, the TCI-states being divided into G TCI groups and M being a positive integer less than N, detecting a physical downlink control channel (PDCCH) carrying downlink control information (DCI) scheduling the PDSCH, the DCI including TCI group information on one of the G TCI groups, determining a TCI-state for the PDSCH among the TCI-states within the TCI group indicated by the TCI group information within the DCI, and receiving the PDSCH based on the determined TCI-state.

According to still another aspect of the present specification, there is provided a processing device. The processing device may include at least one processor, and at least one computer memory which is operatively connected to the at least one processor and stores instructions which, when executed, cause the at least one processor to perform operations, wherein the operations may include receiving a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information, receiving an activation command for M TCI-states among the N TCI-states, the TCI-states being divided into G TCI groups and M being a positive integer less than N, detecting a physical downlink control channel (PDCCH) carrying downlink control information (DCI) scheduling the PDSCH, the DCI including TCI group information on one of the G TCI groups, determining a TCI-state for the PDSCH among the TCI-states within the TCI group indicated by the TCI group information within the DCI, and receiving the PDSCH based on the determined TCI-state.

According to yet another aspect of the present specification, there is provided a computer-readable storing medium. The storing medium may store at least one program code including instructions which, when executed, cause at least one processor to perform operations,
wherein the operations may include receiving a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information, receiving an activation command for M TCI-states among the N TCI-states, the TCI-states being divided into G TCI groups and M being a positive integer less than N, detecting a physical downlink control channel (PDCCH) carrying downlink control information (DCI) scheduling the PDSCH, the DCI including TCI group information on one of the G TCI groups, determining a TCI-state for the PDSCH among the TCI-states within the TCI group indicated by the TCI group information within the DCI, and receiving the PDSCH based on the determined TCI-state.

According to yet another aspect of the present specification there is provided a method of transmitting, by a base station, a downlink signal in a wireless communication system for supporting a non-terrestrial network (NTN). The method may include receiving a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information, receiving an activation command for M TCI-states among the N TCI-states, the TCI-states being divided into G TCI groups and M being a positive integer less than N, detecting a physical downlink control channel (PDCCH) carrying downlink control information (DCI) scheduling the PDSCH, the DCI including TCI group information on one of the G TCI groups, determining a TCI-state for the PDSCH among the TCI-states within the TCI group indicated by the TCI group information within the DCI, and receiving the PDSCH based on the determined TCI-state.

According to yet another aspect of the present specification, there is provided a base station for transmitting a downlink signal in a wireless communication system for supporting a non-terrestrial network (NTN). The base station may include at least one transceiver, at least one processor, and at least one computer memory which is operatively connected to the at least one processor and stores instructions that, when executed, cause the at least one processor to perform operations, the operations may include transmitting a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information, transmitting an activation command for M TCI-states among the N TCI-states, the TCI-states being divided into G TCI groups and M being a positive integer less than N, transmitting a physical downlink control channel (PDCCH) carrying downlink control information (DCI) scheduling the PDSCH, the DCI including TCI group information on one of the G TCI groups, determining a TCI-state for the PDSCH among the TCI-states within the TCI group indicated by the TCI group information within the DCI, and transmitting the PDSCH based on the determined TCI-state.

According to yet another aspect of the present specification, there is provided a processing device. The processing device may include at least one processor, and at least one computer memory which is operatively connected to the at least one processor and stores instructions which, when executed, cause the at least one processor to perform operations, wherein the operations may include transmitting a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information, transmitting an activation command for M TCI-states among the N TCI-states, the TCI-states being divided into G TCI groups and M being a positive integer less than N, transmitting a physical downlink control channel (PDCCH) carrying downlink control information (DCI) scheduling the PDSCH, the DCI including TCI group information on one of the G TCI groups, determining a TCI-state for the PDSCH among the TCI-states within the TCI group indicated by the TCI group information within the DCI, and transmitting the PDSCH based on the determined TCI-state.

According to yet another aspect of the present specification, there is provided a computer-readable storing medium. The storing medium may store at least one program code including instructions which, when executed, cause at least one processor to perform operations, wherein the operations may include transmitting a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information, transmitting an activation command for M TCI-states among the N TCI-states, the TCI-states being divided into G TCI groups and M being a positive integer less than N, transmitting a physical downlink control channel (PDCCH) carrying downlink control information (DCI) scheduling the PDSCH, the DCI including TCI group information on one of the G TCI groups, determining a TCI-state for the PDSCH among the TCI-states within the TCI group indicated by the TCI group information within the DCI, and transmitting the PDSCH based on the determined TCI-state.

In each aspect of the present specification, the determining of the TCI-state for the PDSCH may include determining that a TCI-state associated with an index of a slot to which the PDSCH is scheduled among the TCI-states within the indicated TCI group is the TCI-state for the PDSCH.

In each aspect of the present specification, the TCI configuration may include information on a TCI group with which each of the N TCI-states is associated.

In each aspect of the present specification, the G TCI groups may be determined from the M TCI-states according to a predefined rule.

In each aspect of the present specification, the TCI configuration may include information on the predefined rule.

In each aspect of the present specification, the activation command may be provided through a medium access control (MAC) control element (CE).

In each aspect of the present specification, the receiving or transmitting of the PDSCH based on the determined TCI state may include receiving or transmitting the PDSCH by using a quasi co-location (QCL) relationship between a downlink reference signal for the determined TCI state and a demodulation reference signal (DMRS) for the PDSCH.

### ADVANTAGEOUS EFFECTS

According to some embodiments of the present specification, wireless communication signals can be efficiently transmitted and received through the airborne platforms or space. Accordingly, the overall throughput of the wireless communication system can be increased.

According to some embodiments of the present specification, the continuity of wireless communication services can be ensured, the reliability of the wireless communication services can be enhanced through connectivity between various access technologies, and network resilience and reliability against disasters can be improved.

According to some embodiments of the present specification, the UE receiving beam (and/or BS transmit (Tx) beam) can be reliably changed in communication systems with large propagation delays.

According to some embodiments of the present specification, the time required for switching the UE receive (Rx) beam (and/or BS transmit (Tx) beam) can be reduced. Accordingly, according to some embodiments of the present specification, beam switching is possible with low latency.

According to some embodiments of the present specification, beam switching can be directed with low signaling overhead.

Effects of the present specification are not limited to the above object, and other effects that are not described will be able to be clearly understood by those skilled in the art to which the present specification pertains based on the following description.

### BRIEF DESCRIPTION OF THE DRAWINGS

The accompanying drawings, which are included as part of the detailed description to help understanding of the present invention, provide embodiments of the present invention and describe the contents of the present invention together with the detailed description:
FIG. 1 is a block diagram showing examples of communication devices capable of performing a method according to the present specification;
FIG. 2 shows an example of a frame structure available in a 3GPP-based wireless communication system;
FIG. 3 shows a resource grid of a slot;
FIG. 4 shows multi-beam operation in the 3GPP-based system;
FIG. 5 shows an example of synchronization signal (SS) and physical broadcast channel (PBCH) blocks (SS/PBCH blocks) being transmitted on a cell;
FIGS. 6 and 7 are views for describing the multi-beam operation of the PDCCH;
FIGS. 8 to 10 are views for describing the multi-beam operation of the PDSCH;
FIG. 11 shows a non-terrestrial network (NTN) structure;
FIG. 12 shows an NTN deployment scenario;
FIG. 13 shows beam switching for a satellite with multi-beam operation;
FIG. 14 is a view for describing problems associated with applying a transmission configuration indicator (TCI)-state change based on a conventional medium access control (MAC) control element (CE) and/or downlink control information (DCI) to the NTN;
FIGS. 15 and 16 show a flow of a 2-level multi-beam operation for a PDCCH according to some embodiments of the present specification;
FIG. 17 shows a TCI-state change according to the 2-level multi-beam operation for the PDCCH according to the present specification;
FIG. 18 shows an example of determining a TCI-state for a PDSCH according to some embodiments of the present specification;
FIG. 19 shows another example of determining a TCI-state for a PDSCH according to some embodiments of the present specification;
FIG. 20 shows still another example of determining a TCI-state for a PDSCH according to some embodiments of the present specification;
FIG. 21 shows a flow of downlink signal reception in a UE according to some embodiments of the present specification; and
FIG. 22 shows a flow of downlink signal transmission in a BS according to some embodiments of the present specification.

### DETAILED DESCRIPTION

Hereinafter, various embodiments of the present specification will be described in detail with reference to the accompanying drawings. The detailed description set forth below together with the accompanying drawings is intended to illustrate exemplary embodiments of the present specification and is not intended to represent the only possible embodiments of the present specification. The following detailed description includes specific details to provide a thorough understanding of the present specification. However, those skilled in the art will understand that the present specification may be carried out without these specific details.

In some cases, well-known structures and devices may be omitted or illustrated in the form of a block diagram, focusing on core functions of each structure and device, to avoid obscuring the concepts of the present specification. In addition, the same reference numerals will be used throughout the present specification to describe the same components.

The techniques, devices, and systems, which will be described below, may be applied to various wireless multiple access systems.

For convenience of description, hereinafter, the present specification will be described based on a 3rd Generation Partnership Project (3GPP)-based communication system. However, the technical features of the present specification are not limited thereto. For example, although the following detailed description is based on 3GPP LTE or 5G technology, some embodiments of the present specification are also applicable to any other mobile communication system and systems to be introduced in the future (e.g., 6G) except for matters specific to 3GPP LTE/5G.

Among terms and technologies used in the present specification, terms and technologies that are not specifically described may reference 3GPP-based standard documents, for example, 3GPP TS 23.304, 3GPP TS 23.285, 3GPP TS 23.287, 3GPP TS 24.587, 3GPP TS 36.211, 3GPP TS 36.212, 3GPP TS 36.213, 3GPP TS 36.300, 3GPP TS 36.321, 3GPP 36.322, 3GPP TS 36.323, 3GPP TS and 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.322, 3GPP TS 38.323, 3GPP TS 38.331, etc.

In the examples of the present specification, which will be described below, the expression that a device "assumes" may mean that an entity transmitting a channel transmits the channel according to the "assumption." This may mean that an entity receiving the channel receives or decodes the channel according to the "assumption" under the premise that the channel was transmitted according to the "assumption."

In the present specification, UE (UE) may be fixed or may have mobility and includes various devices that communicate with a base station (BS) to transmit and/or receive user data and/or various control information. The UE may be referred to as terminal equipment, a mobile station (MS), a mobile terminal (MT), or a user terminal (UT). In addition, in the present specification, the BS generally refers to a fixed station that communicates with a UE and/or other BSs and exchanges various data and control information with the UE and other BSs. The BS may be referred to by other terms, such as an advanced BS (ABS), a node-B (NB), an evolved node-B (eNB), a gNB, a base transceiver system (BTS), an access point (AP), a processing server (PS), etc. Hereinafter, for convenience of description, a base station is referred to as a BS regardless of the type or version of the communication technology.

In the present specification, a node refers to a fixed point capable of transmitting and receiving radio signals in communication with a UE. Various types of BSs, regardless of their names, may be used as nodes. At least one antenna is installed on one node. The antenna may refer to a physical antenna, an antenna port, a virtual antenna, or an antenna group. A node is also referred to as a point.

Meanwhile, 3GPP-based communication systems use the concept of cells to manage radio resources, and the cell associated with radio resources is distinguished from a cell within a geographic area. The "cell" within the geographic area can be understood as a coverage area in which a node may provide services using a carrier, and the "cell" of the radio resource is associated with a bandwidth (BW), which is a frequency range configured by the carrier. Since downlink coverage, which is a range in which a node may transmit valid signals, and uplink coverage, which is a range in which a node may receive valid signals from a UE, depend on the carrier carrying the corresponding signals, the coverage of the node is associated with the coverage of the "cell" of the radio resources used by the node. Accordingly, the term "cell" may be used to sometimes refer to the coverage of the service by the node, sometimes to the radio resource, and sometimes to the range in which the signal using the radio resource may reach with valid strength.

The "cell" associated with the radio resource may be defined as a combination of downlink (DL) resources and uplink (UL) resources, that is, a DL component carrier (CC) and an UL CC. The cell may be configured with the DL resource only or with a combination of the DL and UL resources. When carrier aggregation is supported, linkage between a carrier frequency of the DL resources (or DL CCs) and a carrier frequency of the UL resources (or UL CCs) may be indicated by system information. Here, the carrier frequency may be the same as or different from a center frequency of each cell or CC.

In a wireless communication system, a UE receives information from the BS via the DL, and the UE transmits information to the BS via the UL. The information transmitted and/or received by the BS and the UE includes data and various control information, and various physical channels are present depending on the type and purpose of the information transmitted and/or received by the channels.

3GPP-based communication standards define downlink physical channels corresponding to resource elements carrying information originating from higher-level layers, and downlink physical signals corresponding to resource elements used by the physical layer but not carrying information originating from higher-level layers. For example, a physical downlink shared channel (PDSCH), a physical broadcast channel (PBCH), a physical downlink control channel (PDCCH), and the like are defined as downlink physical channels, and reference signals and synchronization signals are defined as downlink physical signals. A reference signal (RS), also referred to as a pilot, refers to a signal with a predefined, a predefined specific waveform known to both the BS and the UE. For example, a demodulation reference signal (DMRS), a channel state information RS (CSI-RS), and the like are defined as downlink reference signals. 3GPP-based communication standards define upperlink physical channels corresponding to resource elements carrying information originating from higher-level layers, and upperlink physical signals corresponding to resource elements used by the physical layer but not carrying information originating from higher-level layers. For example, a physical uplink shared channel (PUSCH), a physical uplink control channel (PUCCH), and a physical random access channel (PRACH) are defined as uplink physical channels and define the demodulation reference signal (DMRS) for uplink control/data signals, a sounding reference signal (SRS) used for uplink channel measurement, etc.

In the present specification, the PDCCH refers to a set of time-frequency resources (e.g., resource elements (REs)) carrying downlink control information (DCI), and the PDSCH refers to a set of time-frequency resources carrying downlink data. In addition, the PUCCH, the PUSCH, and the PRACH refer to sets of time-frequency resources carrying uplink control information (UCI), uplink data, and a random access preamble, respectively. Hereinafter, the expression that a UE/BS transmits/receives a PUCCH/PUSCH/PRACH is used with the same meaning as transmitting/receiving UCI/uplink data/random access preamble on or via the PUCCH/PUSCH/PRACH, respectively. In addition, the expression that a BS/UE transmits/receives a PBCH/PDCCH/PDSCH is used with the same meaning as transmitting/receiving broadcast information/DCI/downlink data on or via the PBCH/PDCCH/PDSCH, respectively.

In the present specification, radio resources (e.g., time-frequency resources) scheduled or configured by the BS to the UE for transmission or reception of the PUCCH/PUSCH/PDSCH are also referred to as PUCCH/PUSCH/PDSCH resources.

Since a communication device receives physical channels and/or physical signals in the form of radio signals, it is not possible to selectively receive, via a radio frequency (RF) receiver, only those radio signals that include a specific physical channel or a specific physical signal, or to selectively receive, via the RF receiver, only those radio signals that exclude a specific physical channel or a specific physical signal. In actual operation, the communication device first receives the radio signals on the cell via the RF receiver, converts the received radio signals, which are RF band signals, into baseband signals, and decodes the physical signals and/or physical channels within the baseband signals using one or more processors. Accordingly, in some embodiments of the present specification, when the physical signal and/or the physical channel are not received, it does not actually mean that the communication device does not receive radio signals including the physical signal and/or the physical channel at all, but rather does not attempt to recover the physical signal and/or the physical channel, for example, does not attempt to decode the physical signal and/or the physical channel from the radio signals.

Communication systems applied to the present specification include wireless devices, BSs, and networks. Here, the wireless device may refer to a device that performs communication using wireless access technology (e.g., 5G NR (New RAT), LTE (e.g., E-UTRA), Wi-Fi, and 6G to be introduced in the future).

Although not limited thereto, the wireless device may include a robot, vehicles, an eXtended Reality (XR) device, a hand-held device, an Internet of Things (IoT), and an artificial intelligence (AI) device/server. For example, the BS and the network may also be implemented as wireless devices, and a specific wireless device may operate as a BS/network node for other wireless devices.

The wireless device may be connected to the network through the BS. AI technology may be applied to the wireless device, and the wireless device may be connected to an AI server through a network. The wireless devices may communicate with each other through the BS/network, but they may also directly communicate with each other without using the BS/network (e.g., sidelink communication).

Wireless communication/connections may be established between wireless devices and BSs, between BSs, and/or between wireless devices. Here, wireless communication/connection may be established through various wireless access technologies (e.g., 5G NR) for uplink/downlink (UL/DL) communication and sidelink (SL) communication (or D2D communication). Through wireless communication/connection (UL/DL, SL), the wireless device and the BS/the wireless device may transmit/receive radio signals. To this end, at least some of various configuration information configuration processes, various signal processing processes (e.g., channel encoding/decoding, modulation/demodulation, resource mapping/demapping, and the like), a resource allocation process, and the like for transmitting/receiving radio signals may be performed based on various proposals of the present specification.

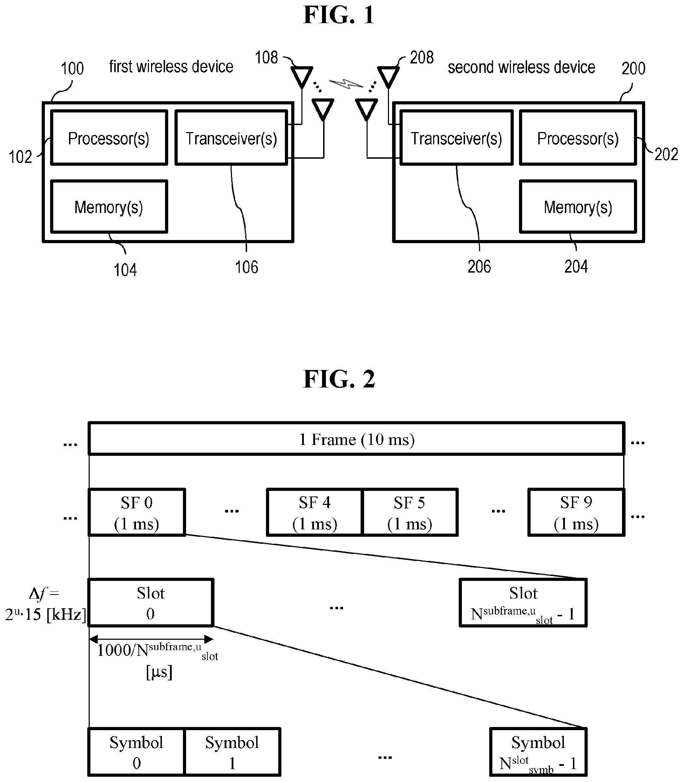

FIG. 1 is a block diagram showing examples of communication devices capable of performing a method according to the present specification. Referring to FIG. 1, a first wireless device 100 and a second wireless device 200 may transmit and/or receive radio signals using various wireless access technologies. Here, {the first wireless device 100 and the second wireless device 200} may be wireless devices included in a communication system.

Each of the first wireless device 100 and the second wireless device 200 includes one or more processors 102 and 202 and one or more memories 104 and 204 and further include one or more transceivers 106 and 206 and/or one or more antennas 108. The processors 102 and 202 may be configured to control the memories 104 and 204 and/or the transceivers 106 and 206 and implement functions, procedures, and/or methods, which will be described/suggested below. For example, the processors 102 and 202 may process information in the memories 104 and 204 to generate first information/signal and transmit a radio signal including the first information/signal via the transceivers 106 and 206. In addition, the processors 102 and 202 may receive a radio signal including second information/signal via the transceivers 106 and 206 and store information obtained by processing the second information/signal in the memories 104 and 204. The memories 104 and 204 may be connected to the processors 102 and 202 and may store various information related to the operations of the processors 102 and 202. For example, the memories 104 and 204 may perform some or all of processes controlled by the processors 102 and 202 or store software code including commands for performing the procedures and/or methods, which will be described/proposed below. Here, the processors 102 and 202 and the memories 104 and 204 may be portions of a communication modem/circuit/chip designed to implement wireless communication technology. The transceivers 106 and 206 may be connected to the processors 102 and 202 and may transmit and/or receive radio signals via one or more antennas 108 and 208. The transceivers 106 and 206 may include a transmitter and/or a receiver.

Although not limited thereto, one or more protocol layers may be implemented by the one or more processors 102 and 202. For example, the one or more processors 102 and 202 may implement one or more layers (e.g., functional layers such as a physical (PHY) layer, a medium access control (MAC) layer, a radio link control (RLC) layer, a packet data convergence protocol (PDCP) layer, a radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present specification. The one or more processors 102 and 202 may generate messages, control information, data, or information according to the functions, procedures, proposals, and/or methods disclosed in the present specification. The one or more processors 102 and 202 may generate signals (e.g., baseband signals) containing PDUs, SDUs, messages, control information, data, or information according to the functions, procedures, proposals, and/or methods disclosed in the present specification and provide the signals to the one or more transceivers 106 and 206. The one or more processors 102 and 202 may receive signals (e.g., baseband signals) from the one or more transceivers 106 and 206 and acquire PDUs, SDUs, messages, control information, data, or information according to the functions, procedures, proposals, and/or methods disclosed in the present specification.

The one or more processors 102 and 202 may be referred to as a controller, a microcontroller, a microprocessor, or a microcomputer. The one or more processors 102 and 202 may be implemented by hardware, firmware, software, or a combination thereof, and the firmware or software may be implemented to include modules, procedures, functions, etc. Firmware or software configured to perform the functions, procedures, proposals, and/or methods disclosed in the present specification may be included in the one or more processors 102 and 202 or stored in the one or more memories 104 and 204 and executed by the one or more processors 102 and 202. The functions, procedures, suggestions, and/or methods disclosed in the present specification may be implemented using firmware or software in the form of code, instructions, and/or sets of instructions.

The one or more memories 104 and 204 may be coupled to the one or more processors 102 and 202 and may store various forms of data, signals, messages, information, programs, codes, instructions, and/or commands. The one or more memories 104 and 204 may be located inside and/or outside the one or more processors 102 and 202. In addition, the one or more memories 104 and 204 may be connected to the one or more processors 102 and 202 using various technologies, such as wired or wireless connections.

The one or more transceivers 106 and 206 may transmit/receive user data, control information, wireless signals/channels, and the like, as described in the methods and/or operational flowcharts of the present specification, to/from one or more other devices. In addition, the one or more processors 102 and 202 may control the one or more transceivers 106 and 206 to transmit/receive user data, control information, or wireless signals to/from one or more other devices. In addition, the one or more transceivers 106 and 206 may be connected to the one or more antennas 108 and 208, and the one or more transceivers 106 and 206 may be configured to transmit and/or receive user data, control information, wireless signals/channels, and the like, as described in the functions, procedures, proposals, methods, and/or operational flowcharts disclosed in the present specification, via the one or more antennas 108 and 208. In the present specification, the one or more antennas may be a plurality of physical antennas or a plurality of logical antennas (e.g., antenna ports). The one or more transceivers 106 and 206 may convert received user data, control information, wireless signals/channels, and the like from RF band signals into baseband signals to process the received user data, control information, wireless signals/channels, and the like using the one or more processors 102 and 202. The one or more transceivers 106 and 206 may convert user data, control information, wireless signals/channels, and the like processed using the one or more processors 102 and 202 from baseband signals to RF band signals. To this end, the one or more transceivers 106 and 206 may include an (analog) oscillator and/or a filter.

In the present specification, the one or more memories 104 and 204 may store instructions or programs, and during execution, the instructions or programs may cause the one or more processors 102 and 202 operably connected to the one or more memories to perform operations according to some embodiments or implementations of the present specification.

In the present specification, a computer-readable (non-transitory) storage medium may store one or more instructions or computer programs, and when executed by the one or more processors, the one or more instructions or computer programs may cause the one or more processors to perform the operations according to some embodiments or implementations of the present specification.

FIG. 2 shows an example of a frame structure available in a 3GPP-based wireless communication system.

The frame structure of FIG. 2 is merely an example, and the number of subframes, the number of slots, and the number of symbols in the frame may be diverse. In some wireless communication systems, an orthogonal frequency division multiplexing (OFDM) numerology (e.g., subcarrier spacing (SCS)) may be set differently between a plurality of cells aggregated to one UE. Accordingly, an (absolute time) duration of a time resource configured with the same number of symbols (e.g., a subframe, a slot, or a transmission time interval (TTI)) may be set differently among aggregated cells. Here, the symbol may include an OFDM symbol (or a cyclic prefix-OFDM (CP-OFDM) symbol) and an SC-FDMA symbol (or a discrete Fourier transform-spread-OFDM (DFT-s-OFDM) symbol). In the present specification, the symbol, the OFDM-based symbol, the OFDM symbol, the CP-OFDM symbol, and the DFT-s-OFDM symbol may be interchangeable.

Referring to FIG. 2, uplink and downlink transmissions are organized in units of frames. Each frame has a duration of T_{f}=(△fₘₐₓ*N_{f}/100)*T_{c}=10 ms, where T_{c} (basic time unit)=1/(△fₘₐₓ*N_{f}), △fₘₐₓ=480*103 Hz, and N_{f}=4096. For reference, the sampling time Tₛ=1/(△f_{ref}*N_{f,ref}), △f_{ref}=15*103 Hz, and N_{f,ref}=2048 Tₛ and T_{c} have a relationship of κ=Tₛ/T_{c}=64. A frame consists of 10 subframes, and a duration of a single subframe, T_{sf}, is 1 ms. The subframes are further divided into slots, and the number of slots in a subframe depends on the subcarrier spacing. Each slot may consist of N^{slot}_{symb} symbols based on a cyclic prefix (CP). For example, in some scenarios, each slot consists of 14 OFDM symbols in the case of a normal CP and 12 OFDM symbols in the case of an extended CP. The numerology depends on the exponentially scalable subcarrier spacing △f=2^{u}*15 kHz. The following table shows the number of OFDM symbols per slot (N^{slot}_{symb}), the number of slots per frame (N^{frame,u}ₛₗₒₜ), and the number of slots per subframe (N^{subframe,u}ₛₗₒₜ) according to the subcarrier spacing △f=2^{u}*15 kHz for the normal CP.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

The following table shows the number of OFDM symbols per slot, the number of slots per frame, and the number of slots per subframe according to the subcarrier spacing △f=2^{µ}*15 kHz for the extended CP.

**[Table 2]**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots are numbered in increasing order within a subframe as nus ∈ {0, ..., n^{subframe,u}ₛₗₒₜ-1} and in increasing order within a frame as n^{u}_{s,f} ∈ {0, ..., n^{frame,u}ₛₗₒₜ-1}.

Hereinafter, embodiments of the present specification are described by referring to the minimum unit of time for scheduling uplink, downlink, and sidelink transmissions as a slot, but the minimum unit of time for scheduling may be referred to by different terms depending on the wireless communication system. For example, in an LTE-based system, the minimum unit of time for scheduling transmissions is referred to as a subframe or a transmission time interval (TTI), while, in an NR-based system, the minimum unit of time for scheduling is referred to as a slot.

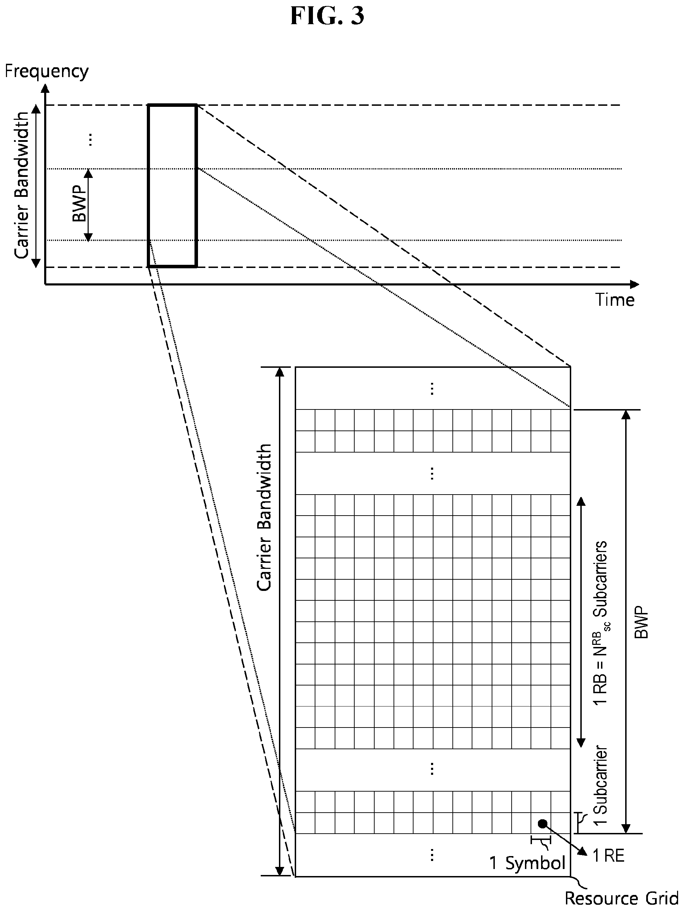

FIG. 3 shows a resource grid of a slot. A slot includes a plurality of symbols (e.g., N^{slot}_{symb}) in a time domain. For each numerology (e.g., a subcarrier spacing) and carrier, a resource grid of N^{size,u}_{grid,x}*N^{RB}_{sc} subcarriers and N^{subframe,u}_{symmb} OFDM symbols starting from a common resource block (CRB) N^{size,u}_{grid} indicated by higher-level layer signaling (e.g., radio resource control (RRC) signaling) is defined. Here, N^{size,u}_{grid,x} is the number of resource blocks (RBs) in the resource grid, and the subscript x is DL for downlink and UL for uplink. N^{RB}_{sc} is the number of subcarriers per RB, and N^{RB}_{sc} is typically 12 in 3GPP-based wireless communication systems. There is one resource grid for a given antenna port p, a subcarrier spacing configuration u, and a transmission direction (DL or UL). A carrier bandwidth N^{size,u}_{grid} for the subcarrier spacing configuration u is provided to the UE by a higher-level layer parameter (e.g., an RRC parameter) from the network. Each element in the resource grid for the antenna port p and the subcarrier spacing configuration u is referred to as a resource element (RE), and each RE may be mapped to one complex-valued symbol. Each RE within the resource grid is uniquely identified by an index k in the frequency domain and an index l indicating a symbol position with respect to a reference point in the time domain. The RBs may be classified into CRBs and physical resource blocks (PRBs). The CRBs are numbered upwards from 0 in the frequency domain for the subcarrier spacing configuration u. The center of subcarrier 0 of CRB 0 for the subcarrier spacing configuration u coincides with "Point A," which is a common reference point for RB grids. The PRBs for the subcarrier spacing configuration u are defined within a bandwidth part (BWP) and are numbered from 0 to N^{size,u}_{BWP,i}-1, where i is the number of the bandwidth part. A relationship between the CRB n^{u}_{CRB} and the PRB n_{PRB} within bandwidth part i is as follows. n^{u}_{PRB}=n^{u}_{CRB}+N^{start,u}_{BWP,i}, where N^{start,u}_{BWP,i} is a CRB in which the bandwidth part starts relative to CRB 0. A BWP includes a plurality of contiguous RBs in the frequency domain. For example, the BWP is a subset of contiguous CRBs defined for a given numerology uⁱ within BWP i on a given carrier. The carrier may include up to N (e.g., 5) BWPs. A UE may be configured to have one or more BWPs on a given component carrier. Data communication is performed through the activated BWPs, and only a preconfigured number (e.g., 1) of BWPs configured for the UE may be activated on the corresponding carrier.

In 3GPP-based systems, a control resource set CORESET, which is a set of time-frequency resources that allows a UE to monitor PDCCHs, may be defined and/or configured. For each downlink (DL) BWP configured for a UE within a serving cell, one or more CORESETs may be configured for the UE. The CORESET consists of a set of physical resource blocks (PRBs) with a duration of one OFDM symbol to three OFDM symbols. The PRBs constituting the CORESET and the CORESET duration may be provided to the UE through higher-level layer (e.g., RRC) signaling. Within the configured CORESET or CORESETs, a set of PDCCH candidates is monitored according to the corresponding search space sets. In the present specification, monitoring implies decoding (referred to as "blind decoding") each PDCCH candidate according to the monitored DCI formats. A master information block (MIB) on a PBCH provides a UE with parameters (e.g., a CORESET#0 configuration) for monitoring a PDCCH for scheduling a PDSCH carrying system information block 1 (SIB1). The PBCH may also indicate that there is no associated SIB1, and in this case, the UE may be configured with not only a frequency range in which no SSB associated with SIB1 is assumed, but also another frequency on which to search for an SSB associated with SIB1. CORESET#0, which is the CORESET for scheduling at least SIB1, may be configured through MIB or dedicated RRC signaling.

The set of PDCCH candidates monitored by the UE is defined in terms of PDCCH search space sets. The search space set may be a common search space (CSS) set or a UE-specific search space (USS) set. Each CORESET configuration is associated with one or more search space sets, and each search space set is associated with one CORESET configuration. For each DL BWP configured for a UE within a serving cell, the UE may receive one or more search space sets through upper-level signaling (e.g., RRC signaling). For each of the search space sets, a UE may receive information on an associated CORESET and parameters used to determine PDCCH monitoring occasions (e.g., a parameter monitoringSlotPeriodicityAndOffset indicating a PDCCH monitoring periodicity and offset, monitoringSymbolsWithinSlot indicating a PDCCH monitoring pattern within a slot that represents first symbol(s) of a CORESET for PDCCH monitoring in each slot monitored by the UE, and a parameter duration indicating a number of slots in which the corresponding search space set are present).

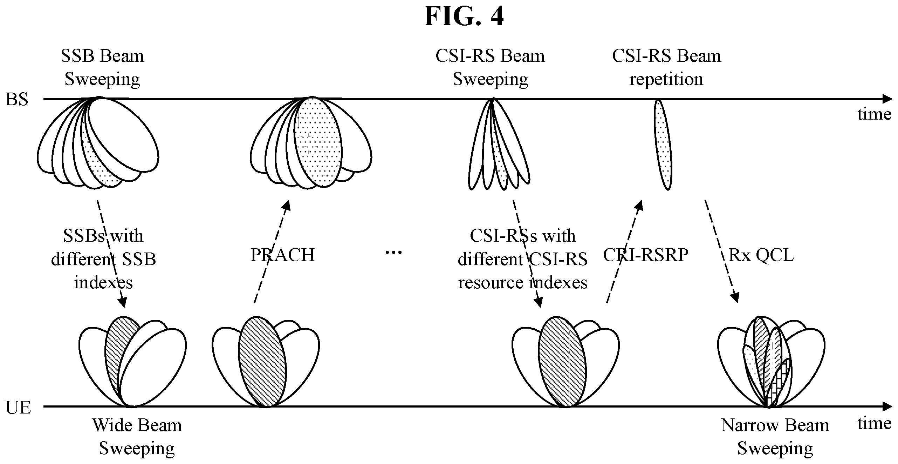

FIG. 4 shows multi-beam operation in the 3GPP-based system.

5G and subsequent 3GPP-based systems may use high ultra-high frequency bands, such as millimeter frequency bands of 6 GHz or higher, to transmit data to multiple users while maintaining high transmission rates using wide frequency bands. However, the millimeter frequency band has frequency characteristics in which signal attenuation with distance appears very rapidly due to the use of such high frequency bands. Accordingly, when using a band of at least 6 GHz or higher, 3GPP-based systems use a narrow beam transmission technique to solve a problem of reduced coverage caused by rapid propagation attenuation by collecting and transmitting energy in a specific direction rather than omnidirectionally in order to compensate for the rapid propagation attenuation characteristics. However, when service is provided using only a single narrow beam, the service range of a single BS becomes limited, and thus, the BS may provide service using a wide beam formed by combining a plurality of narrow beams.

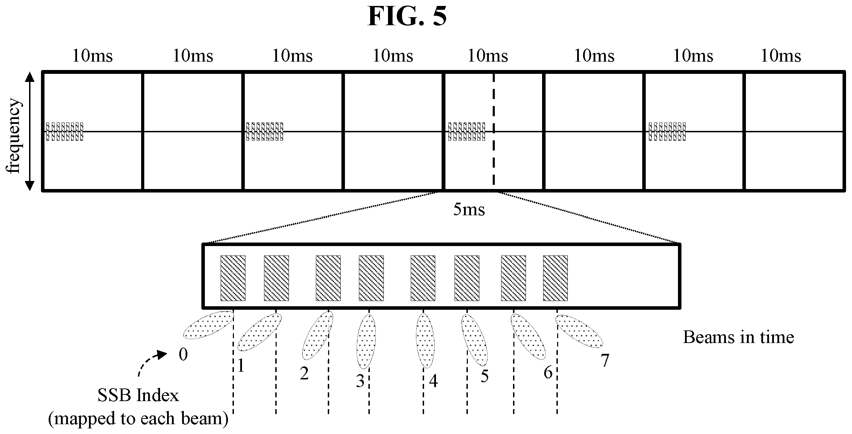

FIG. 5 shows an example of SS/PBCH blocks (SSBs) being transmitted on a cell.

In 3GPP-based systems, each SS/PBCH block (SS/PBCH block, i.e., SSB) is associated with each beam. For example, during a half-frame, different SSBs may be transmitted in different spatial directions (using different beams that span the coverage area of the cell). The possible time positions of SSBs within a half-frame are determined by a subcarrier interval, and the periodicity of the half-frames in which the SSBs are transmitted is set by the network. The plurality of SSBs may be transmitted within a frequency span of a carrier. Different indices of SSBs transmitted and detected on a single cell may correspond to different BS (wide) Tx beams.

In 3GPP-based systems, multi-beam operation is based on beam switching and beam scanning, which transmits and receives signals by changing beam directions over time. For example, assuming the BS supports up to N transmit (Tx) beams, beam sweeping that transmits an SSB consisting of a PSS, an SSS, and a PBCH to each of the up to N beam directions (see SSB beam sweeping in FIG. 4).

Referring back to FIG. 4, the UE may use a wide reception Rx beam to measure power of the SSB(s) received from the BS transmission Tx beams and select a preferred beam. For example, the UE may select one of the detected/received SSBs. The 3GPP-based systems define a specific mapping between an SSB and a random access channel (RACH) occasion to allow the network to know which beam the UE has selected. The RACH occasion is the time and frequency resource available for the transmission of the RACH preamble. Information on how many SSBs may be mapped to a single RACH time and how many preamble indices may be mapped to a single SSB may be provided to the UE by the network. For example, when the network configures the number of SSBs per RACH occasion to 1/N, one SSB is associated with N RACH occasions (where N is a positive integer), and when the network configures the number of SSBs per RACH occasion to N, N preamble indices are mapped to a single SSB. The UE selects one of the SSBs detected and received by the UE on the cell and selectively transmits a RACH occasion based on the selected SSB. The BS may determine which SSB among the SSBs transmitted on the cell the UE has selected by detecting the RACH occasion including the PRACH from the UE through BS Rx beam sweeping. The BS may determine the BS Tx beam for communication with the UE based on the SSB selected by the UE.

For finer beam tuning, CSI-RS may be transmitted. The BS may perform beam refinement using CSI-RS transmissions in narrower beams around the BS Tx beam determined based on the RACH occasion at which the PRACH from the UE is detected (see CSI-RS beam sweeping in FIG. 4). The UE may measure power of the CSI-RS received from these BS Tx narrow beams and report to the BS which beam among the BS Tx narrow beams the UE prefers. For example, the UE may measure the CSI-RS on the CSI-RS resources to select at least one CSI-RS resource and report to the BS the CSI-RS resource indicator (CRI) and the corresponding reference signal received power (RSRP) of the selected CSI-RS resource. The BS determines a BS Tx narrow beam based on the CRI and/or corresponding RSRP reported by the UE and enable the UE to perform Rx beam sweeping to find an appropriate UE Rx beam by repeatedly transmitting CSI-RS to the BS Tx narrow beam (see P3 CSI-RS beam sweeping in FIG. 4). The UE may find an appropriate UE Rx beam by measuring the power of the CSI-RS received from each UE Rx beam.

The UE may detect a beam failure using CSI-RS/SSB. For example, when the L1-RSRP for a beam to be connected falls below a certain limit, the UE determines that it is a beam failure and searches for another candidate beam of good quality. When a predetermined number of beam failure detections occur, a beam failure recovery (BFR) procedure may be triggered using the candidate beam. The network may provide the UE with an identifier (ID) of an SSB transmitted by the cell, which is used to determine a candidate beam for BFR, and a preamble index used to perform BFR when selecting the candidate beam identified by the SSB. When detecting a predetermined number of beam failures, the UE transmits a BFR request to the network by transmitting a PRACH associated with the SSB ID, and the network provides the UE with a random access response (RAR) to the BFR request.

Upon receiving a PDSCH, regarding the Doppler shift, Doppler spread average delay, delay spread, and spatial Rx parameters, the UE may assume that a DM-RS port of the PDSCH is quasi-co-located (QCL) with the associated SSB.

The beam for a target channel/signal may be indicated by the TCI by the UE. A TCI-state may be set and indicated for PDCCH/PDSCH. The TCI-state may include information on a source reference signal and QCL information. For example, regarding the state, the RRC configuration TCI-state, which associates one or more DL reference signals with a corresponding QCL type, may be provided by a BS to a UE. Each TCI-state includes parameters that establish the QCL relationship between one or two downlink reference signals (DL RS) and the DM-RS ports of the PDSCH, the DM-RS ports of the PDCCH, or the CSI-RS port(s) of the CSI-RS resource. For example, each RRC configuration TCI-state may include a TCI-state ID and QCL-Info and include a CSI-RS resource ID or SSB index related to the DL RS provided by the QCL information. The QCL relationship of the TCI-state is configured by an upper-level parameter qcl-type1 for a first DL RS and (when configured) an upper-level parameter qcl-type2 for a second DL RS. The QCL types corresponding to each DL RS may be given by the upper-level parameter qcl-type within QCL-Info and may have one of the following values:
- "typeA": {Doppler shift, Doppler spread, average delay, delay spread}
- "typeB": {Doppler shift, Doppler spread}
- "typeC": {Doppler shift, average delay}
- "typeD": {Spatial Rx parameter}.

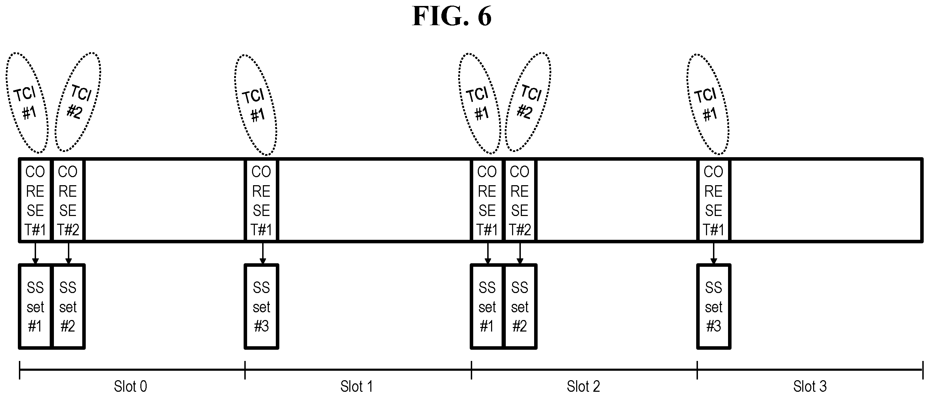

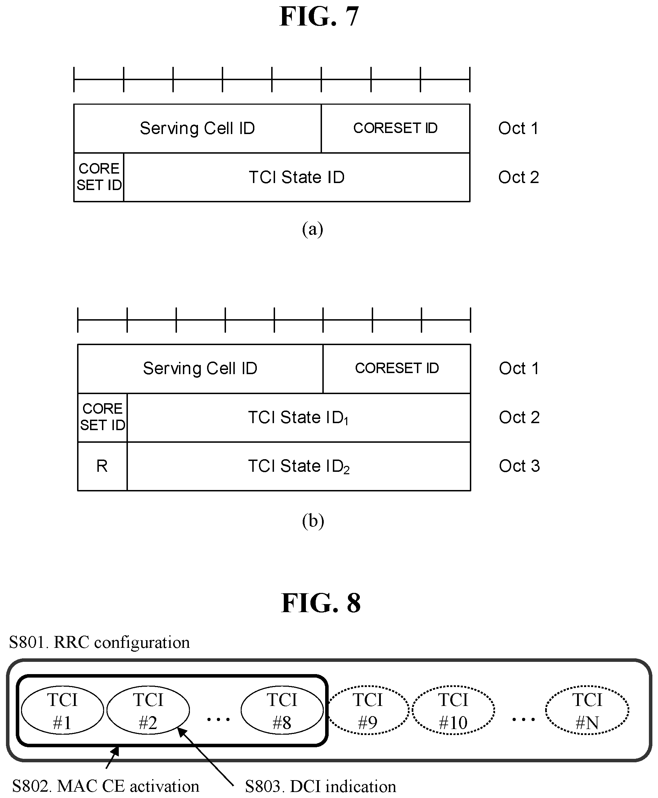

FIGS. 6 and 7 are views for describing a multi-beam operation of the PDCCH.

A CORESET is associated with one or more SS sets. The UE attempts to detect a PDCCH by monitoring PDCCH monitoring occasions of the SS sets.

In some embodiments or scenarios, for the multi-beam operation for the PDCCH, up to a predefined number (e.g., 64) of TCI-states per CORESET for the PDCCH may be configured to the UE through RRC signaling. A BS may activate one (or two) of the TCI-states for CORESET through a MAC CE. When the UE is configured with an RRC parameter *sfnSchemePdcch* configured to "sfnSchemeA" and CORESET is activated with two TCI-states, the UE may assume that the DM-RS port(s) of the PDCCH within the CORESET are quasi-co-located with the DL-RS of the two TCI-states. When the UE is configured with an RRC parameter *sfnSchemePdcch* configured to "sfnSchemeB" and a CORESET is activated with two TCI-states, the UE may assume that the DM-RS port(s) of the PDCCH within the CORESET are quasi-co-located with the DL-RS of the two TCI-states, except for the QCL parameters {Doppler shift, Doppler spread} of a second indicated TCI-state. Here, the RRC parameter *sfnSchemePdcch* may be used to configure a super frame number (SFN) for the PDCCH, and sfnSchemeA or sfnSchemeB may be configured by the RRC parameter *sfnSchemePdcch*.

In the present specification, the MAC CE provided to the UE by the network or the BS is provided to the UE through PDSCH, and the DCI is provided to the UE through the PDCCH. The MAC CE provided by the BS to the UE may be included in the MAC PDU corresponding to a transport block in a physical layer, and the transport block may be transmitted on the PDSCH.

When TCI-states are not explicitly configured for the CORESET, the UE assumes an SSB beam for the CORESET. The assumed SSB beam may refer to a receive (Rx) beam used when receiving an SSB determined by a UE during an initial access process. Moreover, until the TCI-states are configured for the CORESET, the UE may perform initial access by determining one (hereinafter referred to as "SSB#k") of the plurality of SSBs received during the initial access process. The CORESET may be received based on the reception beam information assumed when receiving SSB#k (e.g., may correspond to QCL type D).

In some embodiments of the present specification, the TCI-states configured for a CORESET may be a subset of the TCI-states configured for a PDSCH.

FIG. 7 shows MAC CEs indicating TCI-state(s) for a PDCCH that may be used in some embodiments of the present specification. A more detailed description of the MAC CEs indicating the TCI-state(s) will be given with reference to document 3GPP TS 38.321.

Upon receiving a MAC CE activation command for one (or two) of TCI-states configured for a CORESET, a UE applies the activation command in a first slot after slot k+3N^{subframe,u}ₛₗₒₜ+2^{u}*kmac (where slot k is a slot in which the UE transmits a PUCCH carrying HARQ-ACK information for a PDSCH that provides the activation command; u denotes an SCS configuration for a PUCCH in the slot to which the activation command is applied, and kmac denotes an RRC parameter related to a scheduling offset provided by a network when downlink and uplink frame timings are not aligned at a BS, in which kmac represents a number of slots for an SCS configuration u=0 when provided, and kmac=0 when not provided). When the UE receives a MAC CE activation command for one (or two) of the provided TCI-states for a CORESET, the UE may assume that the DM-RS antenna port associated with the PDCCH receptions within the CORESET is quasi-co-located with one or more DL-RSs configured by the TCI-states. The UE may configure its analog beamforming coefficients for PDCCH receptions within the CORESET (i.e., for PDCCH monitoring) based on the activated TCI-state(s).

FIGS. 8 to 10 are views for describing a multi-beam operation of a PDSCH.

In the case of the PDSCH, beam indication is defined and used independently of the PDCCH. In some embodiments or scenarios, for example, referring to FIG. 8, for multi-beam operation for the PDSCH, N TCI-states (e.g., up to 64 TCI-states) for a PDSCH may be configured for the UE through RRC signaling (S801). A set of TCI-states for PDSCH receptions may be activated by a MAC CE. For example, eight TCI-states may be activated by TCI-states activation/deactivation MAC CEs for a PDSCH (S802).

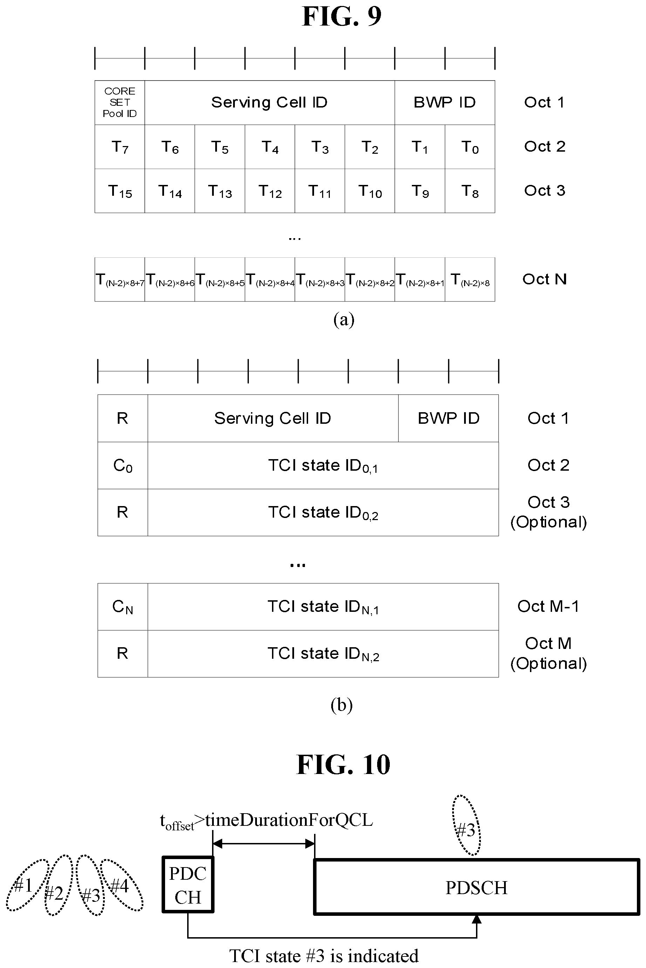

FIG. 9 shows TCI-states activation/deactivation MAC CEs for a PDSCH, which may be used in some embodiments of the present specification. A more detailed description of the TCI-states activation/deactivation MAC CEs for a PDSCH will be given with reference to document 3GPP TS 38.321.

When a UE receives a MAC CE activation command for TCI-states of a serving cell or a serving cell set and transmits a PUCCH carrying HARQ-ACK information in slot n corresponding to a PDSCH conveying the activation command, a mapping between the TCI-states and code points of a DCI field "Transmission Configuration Indication" is applied from a first slot after slot n+3N^{subframe,u}ₛₗₒₜ+(2^{u}/2^{u_kmax})*kmax (where u denotes an SCS configuration for the PUCCH, u_kmax denotes an SCS configuration for kmax having a value of 0 for frequency range 1, and kmax is provided by an RRC parameter kmac). When the RRC parameter kmac is not provided, kmac=0.

The BS may signal DCI scheduling the PDSCH to the UE, and the DCI may indicate the TCI-state to be used for receiving the PDSCH among the TCI-states enabled by the TCI-states activation/deactivation MAC CE (S803). The "Transmission Configuration Indicator" field within the DCI may be used to indicate one of the TCI-states activated by the MAC CE. When the maximum number of TCI-states that may be activated by the MAC CE is 8, the size of the "Transmission Configuration Indicator" field may be 3 bits. When the RRC parameter tci-PresentInDCI, which indicates whether a TCI field is present within a DCI format, is not enabled, for example, when the RRC parameter is not present, the size of the "Transmission Configuration Indicator" field may be 0 bits. The UE that has received the DCI, which may be activated by the MAC CE, may configure, for example, its analog beamforming coefficients based on the TCI-state indicated for receiving the PDSCH.

In some embodiments, the TCI-state for the PDSCH may be assumed differently depending on the time offset between the PDCCH carrying the DCI and the corresponding PDSCH. Referring to FIG. 10, when the time offset between the PDCCH carrying the DCI scheduling the PDSCH and the PDSCH is greater than or equal to timeDurationForQCL, the UE may assume the TCI-state indicated by the "Transmission Configuration Indicator" field within the DCI for the PDSCH, and when the time offset is less than timeDurationForQCL, the UE may assume a default beam. The default beam may correspond to the receive (Rx) beam corresponding to the TCI-state configured in the CORESET of the PDCCH transmitted by the DCI scheduling the PDSCH. timeDurationForQCL defines the minimum number of OFDM symbols required by the UE to perform PDCCH reception and apply the QCL information received from the DCI for PDSCH processing. The number of OFDM symbols is measured from the end of the last symbol of the PDCCH reception to the beginning of the first symbol of the PDSCH reception. The following table shows timeDurationForQCL according to the SCS.

**[Table 3]**

| **SCS** | **timeDurationForQCL [symbols]** |
|---|---|
| 60 kHz | 7, 14, 28 |
| 120 kHz | 14, 28 |
| 480 kHz | 56, 112 |
| 960 kHz | 112, 224 |

The UE may indicate to the network one of the minimum number of OFDM symbols corresponding to respective SCSs of 60 kHz, 120 kHz, 480 kHz, and 960 kHz.

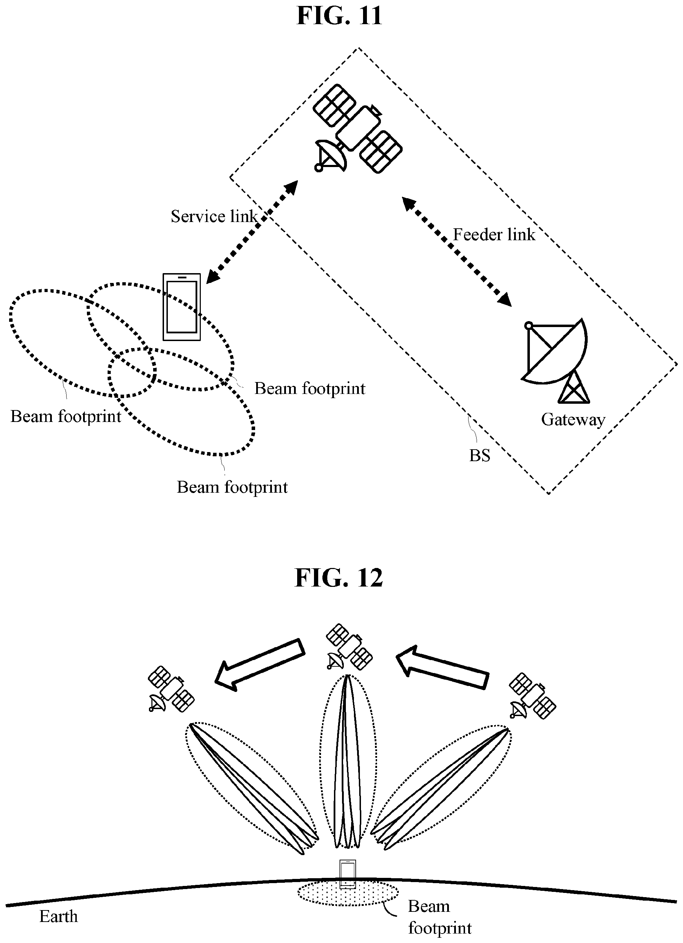

FIG. 11 shows a non-terrestrial network (NTN).

Recently, discussions have been underway to enable 3GPP-based systems to support NTNs. The NTN is any network including non-terrestrial flying objects. When wireless communication through NTN becomes possible in 3GPP-based systems, the continuity of wireless communication services can be ensured, the reliability of wireless communication services can be enhanced through connectivity between various access technologies, and network resilience and reliability against disasters can be improved. Hereinafter, for convenience of description, the following terms are used:
- NTN: A radio access network composed of BSs that provides non-terrestrial radio access to UEs using NTN payloads and NTN gateways mounted on airborne or spaceborne NTN vehicles.
- NTN gateway: An earth station on the ground that provides connectivity to NTN payloads using feeder links. The NTN gateway is a transport network layer (TNL) node.
- NTN payload: A network node mounted on a satellite or high altitude platform station that provides connectivity functions between a service link and a feeder link and provides a satellite or high-altitude platform connection.
- Service link: A wireless link between the NTN payload and the UE.
- Feeder link: A wireless link between the NTN gateway and the NTN payload.
- Satellite: A space-borne vehicle orbiting the Earth while carrying the NTN Payload.
- NTN cell: A cell that provides a service link between the UE and the NTN payload.

Referring to FIG. 11, the NTN gateway is connected to the NTN payload mounted on the satellite, high altitude platform system (HAPS), or the like via the feeder link. The NTN payload is connected to the UE via the service link. The NTN gateway may be connected to a core network of a 3GPP-based system.

The NTN payload transmits radio protocols received from the UE (via the service link) to the NTN gateway (via the feeder link) and transmits radio protocols received from the NTN gateway (via the feeder link) to the UE (via the feeder link). The NTN gateway may support a plurality of NTN payloads, and the NTN payload may be supported by a plurality of NTN gateways. For the NTN, a tracking area may correspond to a fixed geographic area, and each mapping may be configured through a radio access network.

The following three types of service links are supported:
- Earth-fixed service link: A service link provisioned by beam(s) that continuously cover the same geographic area (e.g., in the case of GSO satellites).
- Quasi-Earth-fixed service link: A service link provisioned by beam(s) that cover one geographic area for a limited periodicity and another geographic area for a different duration (e.g., in the case of non-geostationary orbits (NGSOs) that generate steerable beams).
- Earth-moving service link: A service link provisioned by beam(s) whose coverage area slides over the Earth's surface (e.g., in the case of NGSO satellites that generate fixed or non-steerable beams).

NTNs may include satellite communication networks, air-to-ground networks, UAV networks, etc. One of the key concepts in the NTNs is that NTN cells are provided by NGSO satellites that periodically orbit the Earth. Each satellite has its own orbit, which is included in satellite ephemeris information. Based on the satellite ephemeris information, the network may predict feeder link switchover and manage UE mobility and radio resource control. A BS providing NTN access may broadcast orbital trajectory information or ephemeris information related to coordinates for NTN payloads. EphemerisInfo may provide satellite ephemeris in the format of position and velocity state vectors or in the format of orbital parameters. The following tables show descriptions of the EphemerisInfo information elements broadcast by a BS and fields of EphemerisInfo IE.

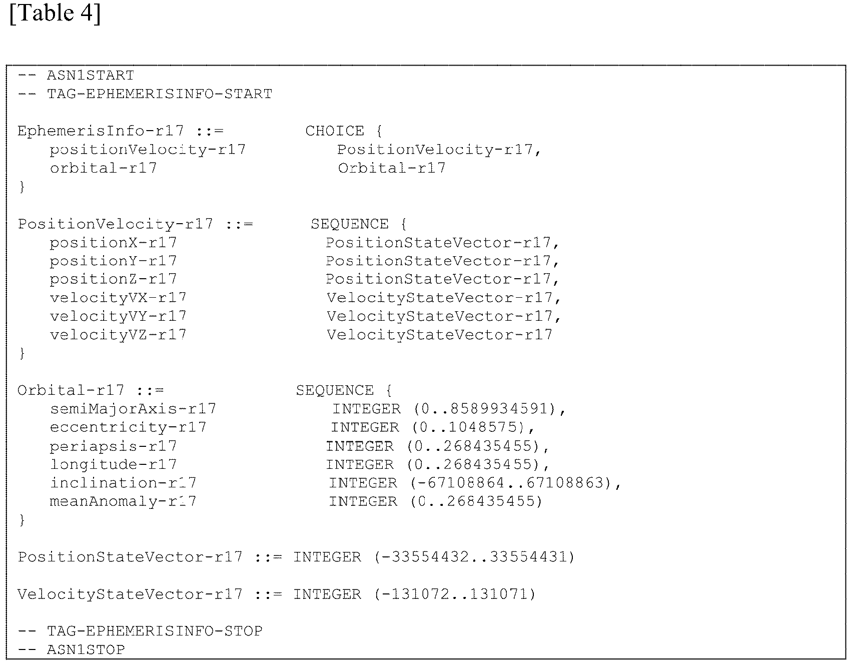

**[Table 5]**

| ***EphemerisInfo* field descriptions** |
|---|
| ***eccentricity*** |
| Satellite orbital parameter: eccentricity e, see NIMA TR 8350.2 [71]. Unit is radian. |
| Step of 1.431 * 10⁻⁸. Actual value = field value * (1.431 * 10⁻⁸). |

| ***inclination*** |
|---|
| Satellite orbital parameter: inclination i, see NIMA TR 8350.2 [71]. Unit is radian. |
| Step of 2.341* 10⁻⁸ rad. Actual value = field value * (2.341* 10⁻⁸). |

| ***longitude*** |
|---|
| Satellite orbital parameter: longitude of ascending node Ω, see NIMA TR 8350.2 [71]. Unit is radian. |
| Step of 2.341* 10⁻⁸ rad. Actual value = field value * (2.341* 10⁻⁸). |

| ***meanAnomaly*** |
|---|
| Satellite orbital parameter: Mean anomaly M at epoch time, see NIMA TR 8350.2 [71]. Unit is radian. |
| Step of 2.341* 10⁻⁸ rad. Actual value = field value * (2.341* 10⁻⁸). |

| ***ZZperiapsis*** |
|---|
| Satellite orbital parameter: argument of periapsis ω, see NIMA TR 8350.2 [71]. Unit is radian. |
| Step of 2.341* 10⁻⁸ rad. Actual value = field value * (2.341* 10⁻⁸). |

| ***positionX, positionY, positionZ*** |
|---|
| X, Y, Z coordinate of satellite position state vector in ECEF. Unit is meter. |
| Step of 1.3 m. Actual value = field value * 1.3. |

| ***semiMajorAxis*** |
|---|
| Satellite orbital parameter: semi major axis α, see NIMA TR 8350.2 [71]. Unit is meter. |
| Step of 4.249 * 10⁻³ m. Actual value = 6500000 + field value * (4.249 * 10⁻³). |

| ***velocityVX, velocityVY, velocityVZ*** |
|---|
| X, Y, Z coordinate of satellite velocity state vector in ECEF. Unit is meter/second. |
| Step of 0.06 m/s. Actual value = field value * 0.06. |

Satellite communication networks may include low Earth orbit (LEO) satellites, medium Earth orbit (MEO) satellites, and geosynchronous Earth orbit (GEO) satellites as follows.

**[Table 6]**

| **Platforms** | **Altitude range** | **Orbit** | **Typical beam footprint size** |
|---|---|---|---|
| Low-Earth Orbit (LEO) | 300 - 1500 km | Circular around the earth | 100 - 1000 km |
| Medium-Earth Orbit (MEO) | 7000 - 25000 km | | 100 - 1000 km |
| Geostationary Earth Orbit (GEO) | 35786 km | National station keeping position fixed | 200 - 2500 km |

The following shows NTN deployment scenarios.

**[Table 7]**

| **Main attributes** | **Deployment-D1** | **Deployment-D2** | **Deployment-D3** | **Deployment-D4** | **Deployment-D5** |
|---|---|---|---|---|---|
| Platform orbit and altitude | GEO at 35 786 km | GEO at 35 786 km | Non-GEO down to 600 km | Non-GEO down to 600 km | UAS between 8 km and 50 km including HAPS |
| Carrier Frequency on the link between Air / space-borne platform and UE | Around 20 GHz for DL | Around 2 GHz for both DL and UL (S band) | Around 2 GHz for both DL and UL (S band) | Around 20 GHz for DL | Below and above 6 GHz |
| | Around 30 GHz for UL (Ka band) | | | Around 30 GHz for UL (Ka band) | |
| Beam pattern | Earth fixed beams | Earth fixed beams | Moving beams | Earth fixed beams | Earth fixed beams |

Referring to the NTN deployment-D3 and NTN deployment-D4 scenarios, an S-band of 2 to 4 GHz and a Ka-band of 26 to 40 GHz are considered as satellite frequency bands for LEO. FIG. 12 shows an NTN deployment scenario. In particular, FIG. 12 shows a case in which a multi-beam operation is applied to the NTN deployment-D4 scenario among the NTN deployment scenarios shown in Table 7.

Since LEO satellites operating in a Ka-band experience severe path loss, the multi-beam operation may be considered for LEO satellites in the Ka-band, as shown in FIG. 12.

According to the NTN deployment-D4 scenario, the beam footprint formed on the ground by beams steered from the satellite toward the ground area is fixed to the Earth. However, from the perspective of the UE on the ground, a beam direction in which the UE needs to observe varies over time. Hereinafter, embodiments of the present specification in which a multi-beam operation is applied in the NTN deployment-D4 scenario will be described.

An NTN architecture may generally include i) a transparent architecture in which a satellite relays radio communication signals between a BS and UEs, and ii) a non-transparent architecture in which the satellite includes all or part of the BS to generate radio communication signals and requires sufficient on-board processing capabilities to perform BS functions.

In the case of the NTN, significant delays occur due to a long distance between the gateway, the satellite, and the UE. Assuming that T_{d,1} denotes a delay occurring on a service link and T_{d,2} denotes a delay occurring on a feeder link, in the transparent architecture in which a satellite relays wireless communication signals between a BS and UEs, a total delay of T_{d}=T_{d,1}+T_{d,2} occurs, while in the non-transparent architecture in which the satellite directly generates wireless communication signals, a delay of T_{d}=T_{d,1} occurs. The following table shows an expected delay between the UE and the satellite depending on the satellite platforms.

**[Table 8]**

| **Platforms** | **Altitude** | **Expected Delay** |
|---|---|---|
| Low-Earth Orbit (LEO) | 700 km | > 2.3 ms |
| Medium-Earth Orbit (MEO) | 10,000 km | > 33.3 ms |
| Geostationary Earth Orbit (GEO) | 35,786 km | > 119.3 ms |

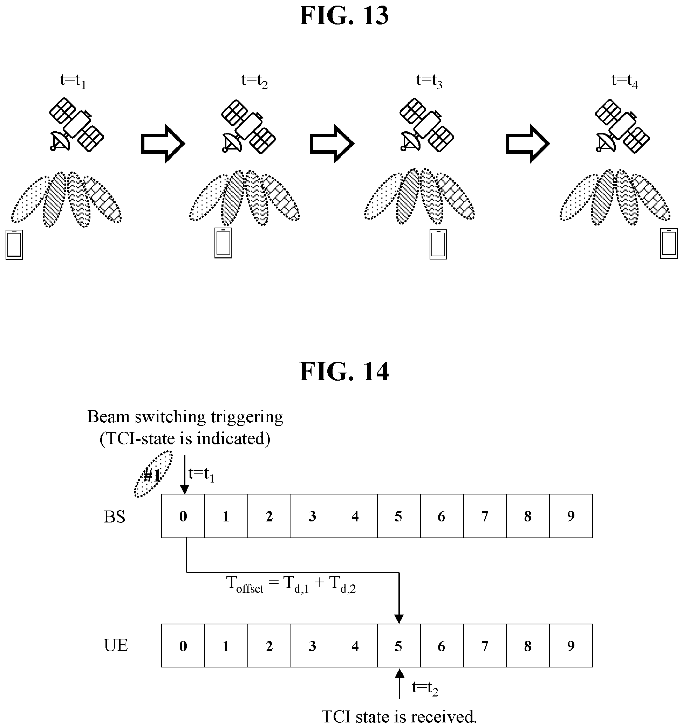

FIG. 13 shows beam switching for a satellite with multi-beam operation.

In some embodiments, even when the beam footprint or the tracking area is fixed, a transmit (Tx) beam of the NTN payload to the UE (i.e., a DL Tx beam) continuously varies, and the UE also needs to change a UE receive (Rx) beam (i.e., a DL Rx beam) to match the DL Tx beam, which continuously varies depending on the satellite's movement. Since the UE Rx beam is associated with the TCI-state, changes in the UE Rx beam are associated with changes in the TCI-state. However, unlike terrestrial networks, NTNs have characteristics such as long propagation delay, wide beam coverage, large delays, satellite movement, and high Doppler shifts. Considering the long delays resulting from these characteristics of the NTNs, dynamic TCI-state changes based on MAC CE/DCI may not be appropriate.

FIG. 14 is a view for describing problems associated with applying a TCI-state change based on a conventional MAC CE and/or DCI to an NTN. In FIG. 14, T_{d,1} denotes a propagation delay occurring between the UE and the satellite, and T_{d,2} denotes a propagation delay occurring between the satellite and the BS. In this case, a propagation delay T_{offset} between the UE and the BS may be represented by T_{offset}=T_{d,1}+T_{d,2}.

Referring to FIG. 14, when the BS indicates a TCI-state corresponding to Beam #1 at t=t₁, due to the propagation delay between the BS and the UE, the indication may be received at a time T_{offset} after time t₁, for example, at time t=t₂. Due to satellite movement during the long propagation delay of the NTN, a situation may occur in which a beam (e.g., Beam #2), different from Beam #1 expected by the BS as an optimal beam, becomes an optimal beam at time t=t₂. In this case, when the UE changes the UE Rx beam to Beam #1 indicated by the BS at time t=t₂, DL channel/reception may not be performed properly. Accordingly, due to long propagation delays and satellite movement, it may not be appropriate for the NTN to change the beam via MAC CE/DCI-based dynamic TCI-state indication.

However, it is difficult to predict the BS Tx beam for a UE based on its movement in the conventional 5G NR process, while the satellite's orbit is fixed and a position/velocity of the satellite may be provided to the UE through ephemeris information, and thus, the satellite's movement may be predicted by the BS and/or the UE. Hereinafter, considering that the position/velocity of the satellite may be predicted, some embodiments of the present specification will be described to solve problems that may occur due to the long propagation delay of the NTN.

### <Multi-beam operation of PDCCH>

According to some embodiments of the present specification, beam prediction and autonomous beam switching may be performed.

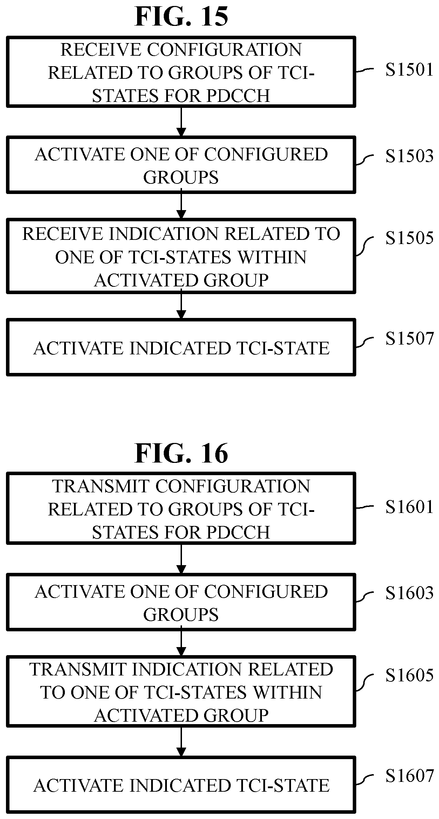

FIGS. 15 and 16 show a flow of a 2-level multi-beam operation for a PDCCH according to some embodiments of the present specification. In particular, FIG. 15 shows a flow of multiplexed beam operation in the UE according to some embodiments of the present specification, and FIG. 16 shows a flow of multiplexed beam operation in the BS according to some embodiments of the present specification.

In some embodiments of the present specification, 2-level multi-beam operation is performed for a PDCCH. At a first level, beam group activation (less sensitive to delay) is performed (e.g., MAC CE-based beam group activation, which is less sensitive to delay compared to activation by DCI), and at a second level, beam activation within the activated beam group is performed. In some embodiments, as a method of determining the beam group, beams within the group may consist of beams having similar beamforming characteristics (e.g., spatial correlation characteristics), and beams within different groups may consist of beams having different beamforming characteristics. In some embodiments of the present specification, for the first level of the 2-level multi-beam operation, a plurality of TCI groups each including a plurality of TCI-states may be configured for the UE for a PDCCH through RRC signaling (S1501, S1601). In some embodiments of the present specification, the TCI-states configured for a CORESET may be a subset of the TCI-states configured for a PDSCH.

One of the TCI groups configured for a CORESET may be activated autonomously based on satellite information (e.g., EphemerisInfo) or by a MAC CE (S1503, S1603). At the second level of the 2-level multi-beam operation, the BS may transmit a MAC CE that activates one of the TCI-states within the activated TCI group (S1605), and the UE may receive the MAC CE (S1505). The BS and the UE may activate the TCI-state indicated by the MAC CE among the TCI-states within the activated TCI group (S1507, S1607). In some embodiments, a PDCCH that schedules the PDSCH carrying the MAC CE may be received based on a TCI-state of a preset activated CORESET. For example, before a TCI-state is configured for a CORESET, the UE may receive the PDCCH based on the received beam information or TCI-state (e.g., may correspond to QCL type D) corresponding to an SSB used when performing the initial access among SSBs received during the initial access process.

In some embodiments of the present specification, when the BS activates a TCI-state, it may mean that a satellite transmits a PDCCH to the UE using a DL transmission beam corresponding to the activated TCI-state. For example, when one of the TCI-states configured for the CORESET is activated by the 2-level multi-beam operation according to some embodiments of the present specification, the BS may perform PDCCH transmission on the SS set(s) of the CORESET using an SSB or CSI-RS resource corresponding to the activated TCI-state and a QCLed DM-RS port. In some embodiments of the present specification, when the UE activates the TCI-state, it may mean that the UE assumes the activated TCI-state for PDCCH reception (e.g., PDCCH monitoring), and the UE may configure its analog beam coefficients for the UE Rx beam based on the activated TCI-state. The UE may perform PDCCH monitoring or PDCCH decoding within the SS set(s) of the CORESET using QCL information provided by the activated TCI-state. For example, the UE may perform PDCCH monitoring or PDCCH decoding by assuming that the DM-RS port of the PDCCH within the SS set(s) associated with the CORESET is in a QCL relationship with the DL-RS for the activated TCI-state.

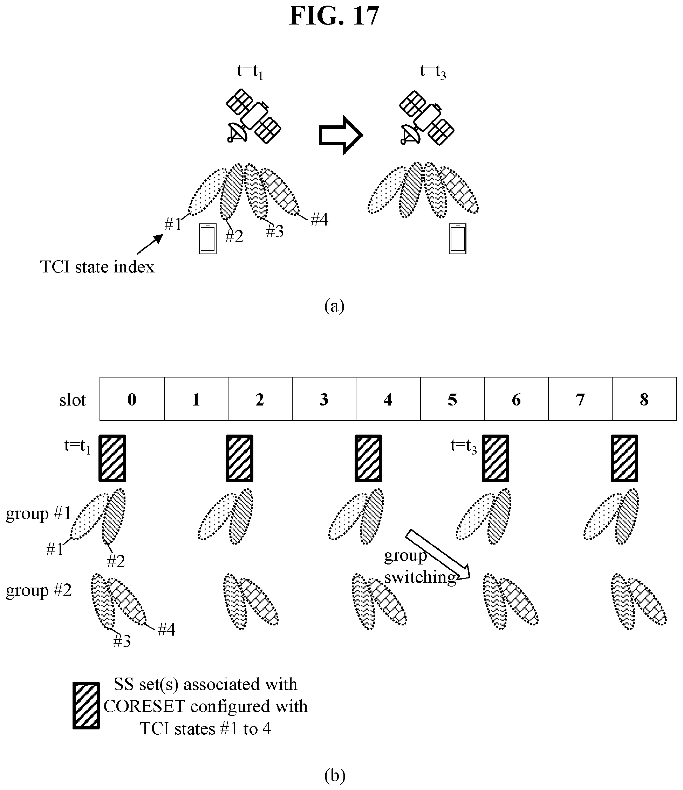

FIG. 17 shows a TCI-state change according to the 2-level multi-beam operation for the PDCCH according to some embodiments of the present specification. In the example of FIG. 17, as shown in FIG. 17A, it is assumed that at time t=t₁, the UE is expected to be in TCI-state #1 or TCI-state #2, and at time t=t₃, the UE is expected to be in TCI-state #3 or TCI-state #4.

Referring to FIG. 17B, for example, the BS may configure TCI Group #1 including TCI-state #1 and TCI-state #2 and TCI Group #2 including TCI-state #3 and TCI-state #4, to the UE(s) for a CORESET for the UE(s). In some embodiments, TCI Group #1 among TCI Group #1 and TCI Group #2 may be automatically activated at time t=t₁. Alternatively, in some embodiments, TCI Group #1 among TCI Group #1 and TCI Group #2 may be activated by a MAC CE provided by the BS at time t=t₁. One of TCI-state #1 and TCI-state #2 within TCI Group #1 may be activated by the MAC CE provided by BS. At time t=t₃ or prior to time t=t₃, group switching from TCI Group #1 to TCI Group #2 may be performed automatically or by the MAC CE provided by the BS. At time t=t₃, when a first TCI-state among TCI-state #3 and TCI-state #4 of the activated TCI Group #2 is indicated by the BS, the UE may use TCI-state #3 for PDCCH reception/PDCCH monitoring, and at time t=t₃, when a second TCI-state among TCI-state #3 and TCI-state #4 of the activated TCI Group #2 is indicated by the BS, the UE may use TCI-state #4 for PDCCH reception/PDCCH monitoring.

In some embodiments of the present specification, since one of the TCI-states within the group is indicated, beam mismatch over time can be reduced. Since the UE has performed the TCI group switch when a specific TCI-state is indicated, it can be easier to switch the TCI-state. In addition, since one of the TCI-states within the group is indicated, signaling overhead for changing TCI-states can be reduced compared to the conventional method.

In some embodiments, in the case of TCI group activation through the MAC CE, the UE may assume a default beam group (i.e., a default TCI group) before receiving a TCI group activation MAC CE. In some embodiments, the default beam group may be a beam group of the lowest index (i.e., a TCI group of the lowest index) or a (pre)configured group. Alternatively, the default beam group may be a TCI group to which a TCI-state, which includes an SSB index for an SSB selected by the UE as DL RS information, belongs when an SSB exceeding a specific threshold among the SSB(s) detected on a cell is present, or the number of SSBs exceeding the specific threshold is greater than 1. The BS may assume that a TCI group, to which a TCI-state including an SSB index for an SSB for which PRACH was detected among the SSBs transmitted on the cell as DL RS information belongs, is the default beam group. Alternatively, a TCI group, to which a TCI-state including an SSB index selected during the initial access process as DL RS information belongs, may be used as the default beam group. Alternatively, the default beam group may be a TCI group to which a TCI-state including a CSI-RS resource ID for an CSI- RS selected by the UE as DL RS information belongs, when an CSI- RS exceeding a specific threshold among the CSI- RS(s) configured on the cell is present, or the number of CSI-RS resources exceeding the specific threshold is greater than 1.

In some embodiments, the TCI group may be automatically changed from the group that was initially activated. In some embodiments, a TCI group pattern may be (pre)defined or (pre)configured for the automatic change of the TCI group. For example, based on the (pre)defined TCI group pattern, when group #n is first activated at t=t₀, it may be defined that group #(n+k₁) is activated at t=t₁ and group #(n+k₂) is activated at t=t₂. Group switching timing (e.g., t₁, t₂, ...) may be determined based on a (pre)set periodicity or a timer. The changed group index (e.g., k₁, k₂, ...) may be determined based on increments in the index (e.g., {+1, +2, +3, ...}) or a (pre)configured pattern. For example, the following methods may be considered regarding automatic TCI group switching:

### > Alt1. Timer-based

The UE may perform TCI group switching based on a timer. For example, the UE may start a preset timer at a specific time point T₀, and when the corresponding timer expires, the UE may change the TCI group. The timer for TCI group switching may be determined according to one of the following items. That is, a time value at which the timer runs may be determined according to one of the following items:
>> Alt 1-1. A timer may be configured for a UE for TCI group switching. For example, NTN setting may include a value of the timer for TCI group switching.
>> Alt 1-2. The UE may calculate the timer for TCI group switching based on satellite information (e.g., EphemerisInfo). The UE may report the timer to the BS.

T₀, which is a time point at which the timer starts, may be determined by one or more of the following items:
>> Alt 1-3. T₀ may correspond to a time point at which the initial access procedure is completed. For example, T₀ may correspond to a time point at which the UE receives a response to Message 3 (Msg3), which is an uplink transmission scheduled by a random access response to the transmission of a random access preamble during the initial access procedure (e.g., a time point at which Message 4 (Msg4) used for contention resolution is received).
>> Alt 1-4. T₀ may correspond to the most recent time point at which a TCI group initialization or TCI group switching occurs.
>> Alt 1-5. A timer-triggering indicator may be transmitted from the BS to the UE, and in this case, T₀ may correspond to a time point at which the corresponding indicator was received. The timer-triggering indicator may be transmitted from the BS to the UE through DCI or a MAC CE.

### > Alt 2. Periodicity-based

For each periodicity and timing (i.e., time instance), the UE changes the TCI group. The periodicity and time instance for TCI group switching may be determined according to one of the following items:
>> Alt 2-1. The start time and periodicity may be configured for the UE by the network. For example, when start time=1 and periodicity=5 are configured for the UE for TCI group switching, the UE may perform TCI group switching at each of time units (e.g., slot, subframe, or frame) 1, 6, 11, and 16. In some embodiments, a parameter periodicityAndOffset indicating the start time and periodicity for TCI group switching, and periodicityAndOffset may be provided by the network to the UE. According to the NTN deployment-D4 scenario, since UEs within the beam footprint covered by the satellite receive service links through the same or similar BS Tx beams over time, in some embodiments of the present specification, the network may broadcast periodicityAndOffset through the NTN cell's PBCH or system information.
>> Alt 2-2. A time pattern and periodicity may be configured for the UE by the network. For example, when a time pattern is configured for a UE in which periodicity corresponding to 10 time units (e.g., 10 slots, 10 subframes, or 10 frames) and time units 0, 3, and 5 within a period of the corresponding periodicity are defined as instances for TCI group switching, TCI group switching may be performed at each of time units 0, 3, and 5. According to the NTN deployment-D4 scenario, since UEs within the beam footprint covered by the satellite receive service links through the same or similar BS Tx beams over time, in some embodiments of the present specification, the network may broadcast periodicityAndOffset through the NTN cell's PBCH or system information.

In some embodiments of the present specification, the following methods may be considered for automatic TCI group switching.

### > Alt 1. TCI group index increment

For example, the TCI group index for a triggering instance n for beam switching may be determined as kₙ=k₀+mod (n, N_{group}). Here, k₀ may correspond to a first activated TCI group, and N_{group} may correspond to the total number of different TCI groups. For example, N_{group} may be the total number of configured TCI groups.

As another example, when a current TCI group index is k, the TCI group index for an n-th triggering instance n for TCI group switching may be determined as kₙ=(k+△k*n) (where △k denotes a TCI group index offset between triggering instances). △k may be configured for the UE by the BS or determined by the UE based on satellite information (e.g., EphemerisInfo).

### > Alt 2. Predefined TCI group index pattern (semi-static scheme)

A set of TCI group indexes (e.g., a set of TCI group indices) may be predefined, and the TCI group indexes may be modified at the triggering instance for TCI group switching according to the predefined order. For example, when a set of TCI group indices {1, 3, 4, 7} is predefined and triggering instances for TCI group switching are t=t₁, t=t₂, t=t₃, and t=t₄, TCI group switching to TCI group #1 may be performed at the triggering instance t=t₁, TCI group switching to TCI group #3 may be performed at the triggering instance t=t₂, TCI group switching to TCI group #4 may be performed at the triggering instance t=t₃, and TCI group switching to TCI group #7 may be performed at the triggering instance t=t₄. In some embodiments of the present specification, TCI group indices within a set of TCI group indices may be applied cyclically to triggering instances. For example, when a set of TCI group indices consisting of N TCI group indices is predefined, and an i-th TCI group index among the N TCI group indices is k'ᵢ (where i=0 to N-1), a beam index for an n-th triggering instance n may be determined as kₙ={k₀+mod (n, N)}. Here, k₀ may be the TCI group index first determined by the UE by applying the set of TCI group indices. For example, in a cell search process, one of SSBs received on a cell may be selected, and a random access process of transmitting a PRACH associated with the selected SSB to a network may be performed, and k₀ may be a TCI group index determined for CORESET #0 configured by a PBCH in the SSB. In some embodiments, k₀ may be indicated by the network to a UE (or UEs) as a TCI group index for a certain triggering instance (e.g., an initial triggering instance). The UE may determine that the TCI group index kₙ={k₀+mod (n, N)} is the TCI group to be used for downlink communication for the n-th triggering instance n following a predefined or preconfigured initial triggering instance.

In some embodiments of the present specification, the UE may receive an NTN configuration including parameters (e.g., ephemeris data) to enable the UE to access a wireless communication service (e.g., 5G, 6G) through an NTN connection. The NTN configuration may include parameter(s) for beam switching triggering (e.g., a timer for TCI group switching, start time and periodicity information for TCI group switching, or time pattern and periodicity information for TCI group switching) and/or parameter(s) for a TCI group switching method (e.g., TCI group index offset, TCI group pattern) according to some embodiments of the present specification.

With respect to the second level of the 2-level multi-beam operation of the present specification, the following beam activation (i.e., TCI-state activation) may be considered.
> Alt 1. Activation of TCI-state based on both the group index (i.e., a group identifier (ID)) and the TCI-state index (i.e., a TCI-state ID)
   >> Both the group ID and the TCI-state ID may be indicated by a MAC CE. For example, when group ID=X and TCI-state ID=Y are indicated, the UE may activate TCI-state Y within group X for PDCCH monitoring. Here, TCI-state ID=Y may be a value identifying one of the TCI-states within a TCI group, rather than a value identifying one of the entire TCI-states configured for a CORESET. For example, assuming that a TCI group includes M TCI-states, a UE that has received TCI-state ID=Y may activate the TCI-state with TCI-state ID=Y, assuming that TCI-state IDs #0 to TCI-state #(M-1) are assigned to the M TCI-states within the TCI group. In some embodiments of the present specification, a MAC CE indicating a TCI-state ID may indicate one of TCI-state #0 to TCI-state #(L-1) based on the maximum number L of TCI-states that may be included in the group. That is, in TCI-state ID=Y, Y may be one of 0 to (L-1).
   >> In some embodiments, considering that the UE and the satellite move over time, an additional determination may be made as to whether the indicated group ID (=X) is the same as the currently active group ID (=X_{act}). When the indicated group ID (=X) is not the same as the currently active group ID (=X_{act}), the following operation may be considered.
      >>> The UE may activate group X according to a MAC CE command. The UE may activate the TCI-state corresponding to TCI-state ID=Y among the TCI-states within group X for PDCCH monitoring. In some embodiments, the UE may report a group mismatch to the BS so that the BS may use the report for beam updating in the future.
      >>> The UE may ignore a Group X activation command and maintain the currently active Group X_{act}. In some embodiments, the UE may activate the TCI-state corresponding to TCI-state ID=Y among the TCI-states within the Group X_{act} for PDCCH monitoring based on the MAC CE. In some embodiments, the UE may report a group mismatch to the BS so that the BS may use the report for beam updating in the future.
> Alt 2. TCI-state activation based on TCI-state ID
   >> The UE may assume that a group to which the TCI-state change is to be applied is the currently active Group X_{act}.
   >> When TCI-state ID=Y is indicated, the UE may activate the TCI-state corresponding to TCI-state ID=Y among the TCI-states within the currently active Group X_{act} for PDCCH monitoring.

### <Multi-beam operation of PDSCH>

Embodiments related to the multi-beam operation of the PDSCH, which will be described below, may be applied in conjunction with or independently of the method of determining the TCI-state for the CORESET described with reference to FIGS. 6 and 7. Alternatively, the embodiments related to the multi-beam operation of the PDSCH, which will be described below, may be applied in conjunction with or independently of some embodiments described in Section <Multi-beam operation of PDSCH>.

The following methods may be considered for the multi-beam operation of the PDSCH:

### * Alt 1. Indicating a plurality of TCI-states

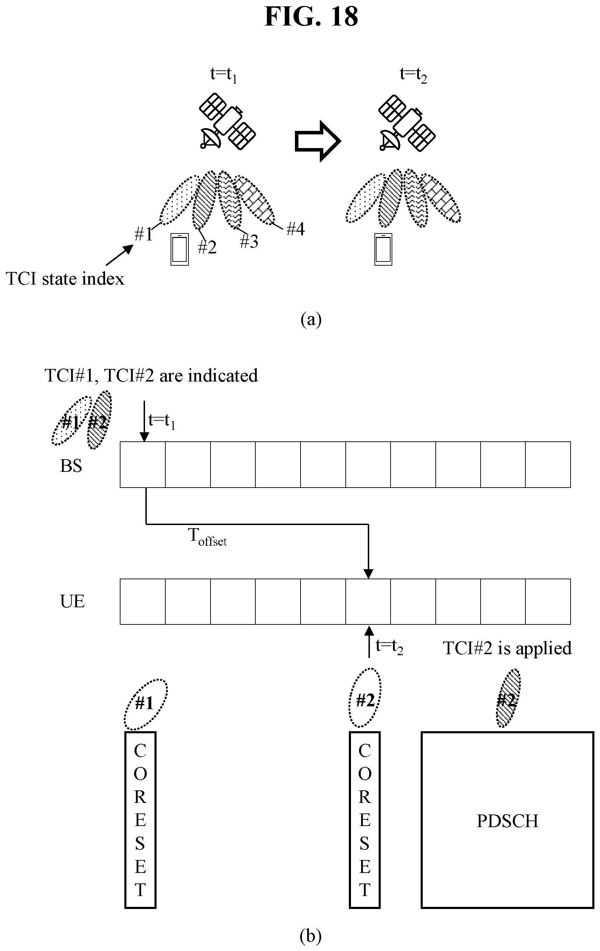

FIG. 18 shows an example of determining a TCI-state for a PDSCH according to some embodiments of the present specification.

In some embodiments, the DCI scheduling the PDSCH may indicate a plurality of TCI-states simultaneously. When scheduling the PDSCH, the BS may include a plurality of TCI-states that is likely to be applied to the PDSCH in the DCI. For example, one TCI and one or more additional TCIs (e.g., TCI#X1, TCI#X2) may be indicated through DCI scheduling the PDSCH.

A UE that has received the DCI scheduling the PDSCH may apply one of the TCI-states indicated by the DCI. In this case, the following items may be considered.
> Alt 1-1. In some embodiments, the UE may randomly select one of the indicated TCI-states (according to its own circumstances).
> Alt 1-2. In some embodiments, the UE may select one of the indicated TCI-states for the PDSCH based on a current PDCCH TCI-state. Referring to FIG. 18, in Alt 1-2, it is assumed that T_{offset} is a propagation delay between the BS and the UE and is a value known to both the BS and the UE. When the BS transmits DCI indicating TCI#1 and TCI#2 at time t=t₁, the UE may receive the DCI at time t=t₂, which is after Toffset from time t=t₁. In some embodiments, one of the TCI-states indicated by the DCI may be determined as the TCI-state for the PDSCH based on whether the current PDCCH TCI-state is the same as the previous beam switching timing (i.e., TCI-state switching timing). For example, it may be defined that, when the PDCCH TCI-state does not change until time t=t₂, the UE applies TCI state #1 among TCI-state #1 and TCI-state #2 indicated by the DCI, and when the PDCCH TCI-state changes at or before time t=t₂, the UE applies TCI-state #2. Referring to FIG. 18, since the TCI-state for the CORESET is TCI-state #1 before time t=t₂ and is changed to TCI-state #2 at time t=t₂, the UE applies TCI-state #2 among TCI-state #1 and TCI-state #2 indicated by the DCI scheduling the PDSCH. In some embodiments of the present specification, the TCI-state for the CORESET may be determined according to the manner described with reference to FIGS. 6 and 7. Alternatively, in some embodiments of the present specification, the TCI-state for the CORESET may be determined according to one of the methods described in Section <Multi-beam operation of PDCCH>.

### * Alt 2. Single TCI and PDCCH TCI-state

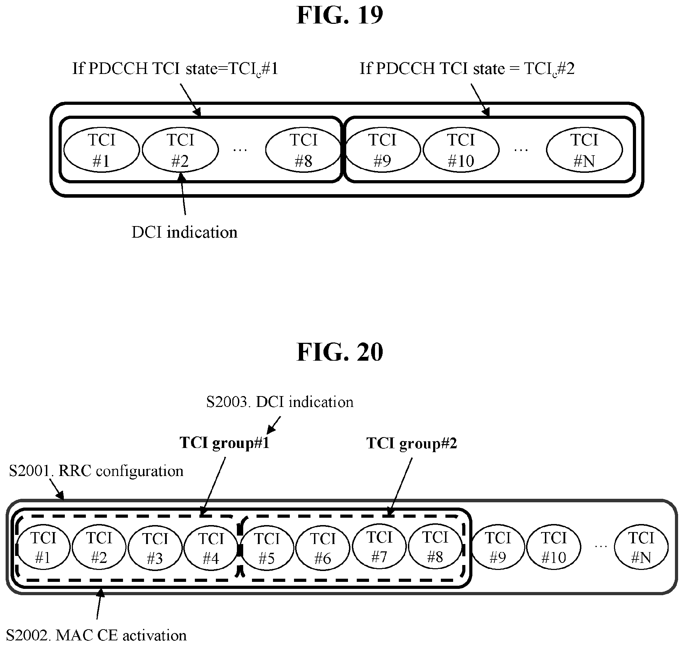

FIG. 19 shows another example of determining a TCI-state for a PDSCH according to some embodiments of the present specification.

In some embodiments, a code point of a TCI field within DCI may be determined by the TCI-state of the PDCCH. Here, the PDCCH corresponds to the PDCCH carrying the DCI. In some embodiments of the present specification, the TCI-state of the PDCCH may be the TCI-state for the CORESET in which the PDCCH is received. The TCI-state for the CORESET may be determined according to the manner described with reference to FIGS. 6 and 7. Alternatively, in some embodiments of the present specification, the TCI-state for the CORESET may be determined according to one of the methods described in Section <Multi-beam operation of PDCCH>.

In Alt 2, the PDCCH TCI-state may be associated with a TCI group for a PDSCH. For example, referring to FIG. 19, when the PDCCH TCI-state is TCI_{c}#1, the UE may assume that DCI code points are {TCI#1, TCI#2, ..., TCI#8}, and when the PDCCH TCI-state is TCI_{c}#2, the UE may assume that the DCI code points are {TCI#9, TCI#10, ..., TCI#16}. The TCI field within the DCI may indicate one of the TCI-states (i.e., TCI groups) assumed for the DCI code points based on the determined code points. The UE may apply the indicated TCI-state within the TCI group associated with the PDCCH TCI-state to PDSCH reception. For example, when the PDCCH TCI-state is TCI_{c}#2 and the TCI group associated with TCI_{c}#2 includes {TCI#10 to TCI#16} and the TCI field value within the DCI indicates 0, the UE may determine that TCI#10 is the TCI-state for a PDSCH and apply TCI#10 for PDSCH reception.

### * Alt 3. TCI-state group indication + autonomous beam switching

FIG. 20 shows still another example of determining a TCI-state for a PDSCH according to some embodiments of the present specification.

Referring to FIG. 20, N TCI-states for a PDSCH are configured through RRC configuration (S2001), and some of the N TCI-states may be activated through a MAC CE activation command (S2002). G TCI groups may be determined from the activated TCI-states. In some embodiments, the G TCI groups based on the activated TCI-states may be determined according to a predefined rule. Alternatively, in some embodiments, the G TCI groups based on the activated TCI-states may be set through a MAC CE. Alternatively, in some embodiments, when N TCI-states for a PDSCH are configured through RRC signaling, TCI group information on the TCI group to which each of the TCI-states belongs is provided, and a UE and a BS may determine the TCI group for each of the activated TCI-states based on the TCI group information. The TCI groups may be mapped to code points in fields within the DCI, and the DCI may indicate one of the TCI groups (S2003).

The UE may apply one of the TCI-states within the indicated TCI group for the PDSCH. In this case, among the TCI-states within the indicated TCI group, the TCI-state to be applied may be determined according to one of the following items:
> Alt 3-1. Based on the current unit index: When the time unit index is m, TCI-state #X may be applied. Here, the time unit index m may correspond to the index of the time unit to which the PDSCH is scheduled. Assuming that the beam changes according to a structured pattern over time, the index of the time unit (e.g., symbol, slot, subframe, or frame) may be associated with the TCI-state. A relationship between the index of the time unit and the TCI-state may be (pre)defined. For example, slot indices and TCI-states may have a predefined/preconfigured relationship, and the TCI-state for the slot index may be determined based on the predefined/preconfigured relationship. For example, TCI-states within the TCI group may be cyclically mapped to slot indices. For example, the following association relationship may be defined between the time unit index m and TCI-state #X.
   - Alt 3-1-1. When there are a total of K TCI-states (e.g., TCI#X₁, TCI#X₂, ..., TCI#X_{K}) within a group, TCI-state index X for the time unit index m may be determined as X=mod(m,K)+X₁.
   - Alt 3-1-2. When there are a total of K TCI-states (TCI#X₁, TCI#X₂, ..., TCI#X_{K}) within a group, in a method of determining TCI-state index X for the time unit index m, a relationship between TCI-state index X when m_k=mod(m,K) may be preestablished through upper-level signaling.
> Alt 3-2. Random selection: The UE may randomly select one of the TCI-states within the TCI group.

According to some embodiments of the present specification, even in environments with long propagation delay, the UE can effectively determine TCI-states for a DL channel/signal.

Some embodiments of the present specification related to the TCI-state switching have been described above assuming the NTN to help understanding, but embodiments of the present specification are not limited to the NTN and may also be applied to a TN.

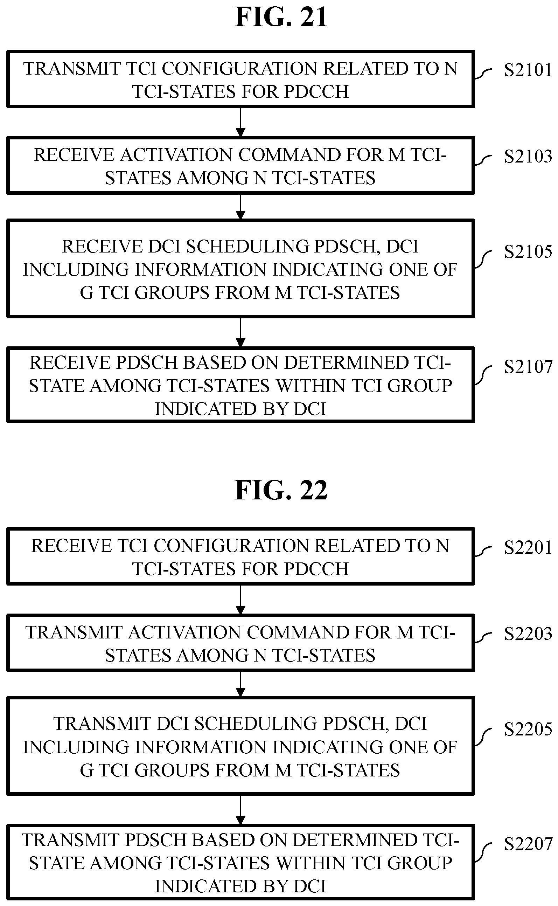

FIG. 21 shows a flow of downlink signal reception in a UE according to some embodiments of the present specification.

A UE may perform operations according to some embodiments of the present specification in relation to the PDSCH reception. The UE may include at least one transceiver, at least one processor, and at least one computer memory that is operably connected to the at least one processor and stores instructions that, when executed, cause the at least one processor to perform operations according to some embodiments of the present specification. A processing device for the UE may include at least one processor, and at least one computer memory that is operably connected to the at least one processor and stores instructions that, when executed, cause the at least one processor to perform operations according to some embodiments of the present specification. A computer-readable (non-transitory) storage medium may store at least one computer program including instructions that, when executed by the at least one processor, cause the at least one processor to perform operations according to some embodiments of the present specification. A computer program or computer program product may be recorded on at least one computer-readable (non-transitory) storage medium and may include instructions that, when executed, cause (at least one processor) to perform operations according to some embodiments of the present specification. In the UE, the processing device, the computer-readable (non-transient) storage medium, and/or the computer program product, the operations may include receiving a TCI configuration for N TCI-states for PDSCH receptions (S2101), in which N is an integer greater than 1 and each of the N TCI-states includes information on a downlink reference signal and QCL information, receiving an activation command for M TCI-states among the N TCI-states (S2103), in which the TCI-states are divided into G TCI groups and M is a positive integer less than N, detecting a PDCCH carrying DCI scheduling the PDSCH (S2105), in which the DCI includes TCI group information on one of the G TCI groups, determining a TCI-state for the PDSCH among the TCI-states within the TCI group indicated by the TCI group information within the DCI, and receiving the PDSCH based on the determined TCI-state (S2107).

In some embodiments, the determining of the TCI-state for the PDSCH may include determining that a TCI-state associated with an index of a slot to which the PDSCH is scheduled among the TCI-states within the indicated TCI group is the TCI-state for the PDSCH.

In some embodiments, the TCI configuration may include information on a TCI group with which each of the N TCI-states is associated.

In some embodiments, the G TCI groups may be determined from the M TCI-states according to a predefined rule.

In some embodiments, the TCI configuration may include information on the predefined rule.

In some embodiments, the activation command may be received through a MAC CE.

In some embodiments, the receiving of the PDSCH based on the determined TCI-state may include receiving the PDSCH using a QCL relationship between a downlink reference signal for the determined TCI-state and a demodulation reference signal for the PDSCH.

FIG. 22 shows a flow of downlink signal transmission in a BS according to some embodiments of the present specification.

A BS may perform operations according to some embodiments of the present specification in relation to the PDSCH transmission. The BS may include at least one transceiver, at least one processor, and at least one computer memory that is operably connected to the at least one processor and stores instructions that, when executed, cause the at least one processor to perform operations according to some embodiments of the present specification. A processing device for the BS may include at least one processor, and at least one computer memory that is operably connected to the at least one processor and stores instructions that, when executed, cause the at least one processor to perform operations according to some embodiments of the present specification. A computer-readable (non-transitory) storage medium may store at least one computer program including instructions that, when executed by the at least one processor, cause the at least one processor to perform operations according to some embodiments of the present specification. A computer program or computer program product may be recorded on at least one computer-readable (non-transitory) storage medium and may include instructions that, when executed, cause (at least one processor) to perform operations according to some embodiments of the present specification. In the BS, the processing device, the computer-readable (non-transient) storage medium, and/or the computer program product, the operations may include transmitting a TCI configuration for N TCI-states for PDSCH receptions (S2201), in which N is an integer greater than 1 and each of the N TCI-states includes information on a downlink reference signal and QCL information, transmitting an activation command for M TCI-states among the N TCI-states (S2203), in which the TCI-states are divided into G TCI groups and M is a positive integer less than N, transmitting a PDCCH carrying DCI scheduling the PDSCH (S2205), in which the DCI includes TCI group information on one of the G TCI groups, and determining a TCI-state for the PDSCH among the TCI-states within the TCI group indicated by the TCI group information within the DCI, and transmitting the PDSCH based on the determined TCI-state (S2207).

In some embodiments, the determining of the TCI-state for the PDSCH may include determining that a TCI-state associated with an index of a slot to which the PDSCH is scheduled among the TCI-states within the indicated TCI group is the TCI-state for the PDSCH.

In some embodiments, the TCI configuration may include information on a TCI group with which each of the N TCI-states is associated.

In some embodiments, the G TCI groups may be determined from the M TCI-states according to a predefined rule.

In some embodiments, the TCI configuration may include information on the predefined rule.

In some embodiments, the activation command may be transmitted through a MAC CE.

In some embodiments, the transmitting of the PDSCH based on the determined TCI-state may include transmitting the PDSCH using a QCL relationship between a downlink reference signal for the determined TCI-state and a demodulation reference signal for the PDSCH.

As described above, the examples disclosed in the present specification are provided to enable those skilled in the art to implement and practice the present specification. While the above description has been provided with reference to the examples of the present specification, those skilled in the art can modify and change the examples of the present specification in various ways. Accordingly, the present specification is not intended to be limited to the examples described herein but is intended to provide the broadest scope consistent with the principles and novel features disclosed herein.

The embodiments of the present specification may be used in wireless communication systems, including a BS, a UE, and other devices.

## Claims

1. A method of receiving, by a UE, a downlink signal in a wireless communication system for supporting a non-terrestrial network (NTN), the method comprising:
receiving a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information;
receiving an activation command for M TCI-states among the N TCI-states, the TCI-states being divided into G TCI groups and M being a positive integer less than N;
detecting a physical downlink control channel (PDCCH) carrying downlink control information (DCI) scheduling the PDSCH, the DCI including TCI group information on one of the G TCI groups;
determining a TCI-state for the PDSCH among the TCI-states within the TCI group indicated by the TCI group information within the DCI; and
receiving the PDSCH based on the determined TCI-state.

2. The method of claim 1, wherein the determining of the TCI-state for the PDSCH includes determining that a TCI-state associated with an index of a slot to which the PDSCH is scheduled among the TCI-states within the indicated TCI group is the TCI-state for the PDSCH.

3. The method of claim 1, wherein the TCI configuration includes information on a TCI group with which each of the N TCI-states is associated.

4. The method of claim 1, wherein the G TCI groups are determined from the M TCI-states according to a predefined rule.

5. The method of claim 1, wherein the TCI configuration includes information on the predefined rule.

6. The method of claim 1, wherein the activation command is received through a medium access control (MAC) control element (CE).

7. The method of claim 1, wherein the receiving of the PDSCH based on the determined TCI-state includes receiving the PDSCH using a QCL relationship between a downlink reference signal for the determined TCI-state and a demodulation reference signal for the PDSCH.

8. A method of receiving, by a UE, a downlink signal in a wireless communication system for supporting a non-terrestrial network (NTN), the method comprising:
at least one transceiver;
at least one processor; and
at least one computer memory which is operatively connected to the at least one processor and stores instructions which, when executed, cause the at least one processor to perform operations,
wherein the operations includes:
receiving a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information;
receiving an activation command for M TCI-states among the N TCI-states, the TCI-states being divided into G TCI groups and M being a positive integer less than N;
detecting a physical downlink control channel (PDCCH) carrying downlink control information (DCI) scheduling the PDSCH, the DCI including TCI group information on one of the G TCI groups;
determining a TCI-state for the PDSCH among the TCI-states within the TCI group indicated by the TCI group information within the DCI; and
receiving the PDSCH based on the determined TCI-state.

9. A processing device in a wireless communication system, comprising:
at least one processor; and
at least one computer memory which is operatively connected to the at least one processor and stores instructions which, when executed, cause the at least one processor to perform operations,
wherein the operations includes:
receiving a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information;
receiving an activation command for M TCI-states among the N TCI-states, the TCI-states being divided into G TCI groups and M being a positive integer less than N;
detecting a physical downlink control channel (PDCCH) carrying downlink control information (DCI) scheduling the PDSCH, the DCI including TCI group information on one of the G TCI groups;
determining a TCI-state for the PDSCH among the TCI-states within the TCI group indicated by the TCI group information within the DCI; and
receiving the PDSCH based on the determined TCI-state.

10. A computer-readable storing medium,
which stores at least one program code including instructions which, when executed, cause at least one processor to perform operations,
wherein the operations include
receiving a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information;
receiving an activation command for M TCI-states among the N TCI-states, the TCI-states being divided into G TCI groups and M being a positive integer less than N;
detecting a physical downlink control channel (PDCCH) carrying downlink control information (DCI) scheduling the PDSCH, the DCI including TCI group information on one of the G TCI groups;
determining a TCI-state for the PDSCH among the TCI-states within the TCI group indicated by the TCI group information within the DCI; and
receiving the PDSCH based on the determined TCI-state.

11. A method of transmitting, by a base station, a downlink signal in a wireless communication system for supporting a non-terrestrial network (NTN), the method comprising:
transmitting a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information;
transmitting an activation command for M TCI-states among the N TCI-states, the TCI-states being divided into G TCI groups and M being a positive integer less than N;
transmitting a physical downlink control channel (PDCCH) carrying downlink control information (DCI) scheduling the PDSCH, the DCI including TCI group information on one of the G TCI groups;
determining a TCI-state for the PDSCH among the TCI-states within the TCI group indicated by the TCI group information within the DCI; and
transmitting the PDSCH based on the determined TCI-state.

12. A base station for transmitting a downlink signal in a wireless communication system for supporting a non-terrestrial network (NTN), the base station comprising:
at least one transceiver;
at least one processor; and
at least one computer memory which is operatively connected to the at least one processor and stores instructions which, when executed, cause the at least one processor to perform operations,
wherein the operations includes:
transmitting a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information;
transmitting an activation command for M TCI-states among the N TCI-states, the TCI-states being divided into G TCI groups and M being a positive integer less than N;
transmitting a physical downlink control channel (PDCCH) carrying downlink control information (DCI) scheduling the PDSCH, the DCI including TCI group information on one of the G TCI groups;
determining a TCI-state for the PDSCH among the TCI-states within the TCI group indicated by the TCI group information within the DCI; and
transmitting the PDSCH based on the determined TCI-state.

13. A processing device in a wireless communication system, comprising:
at least one processor; and
at least one computer memory which is operatively connected to the at least one processor and stores instructions which, when executed, cause the at least one processor to perform operations,
wherein the operations includes:
transmitting a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information;
transmitting an activation command for M TCI-states among the N TCI-states, the TCI-states being divided into G TCI groups and M being a positive integer less than N;
transmitting a physical downlink control channel (PDCCH) carrying downlink control information (DCI) scheduling the PDSCH, the DCI including TCI group information on one of the G TCI groups;
determining a TCI-state for the PDSCH among the TCI-states within the TCI group indicated by the TCI group information within the DCI; and
transmitting the PDSCH based on the determined TCI-state.

14. A computer-readable storing medium,
which stores at least one program code including instructions which, when executed, cause at least one processor to perform operations,
wherein the operations include
transmitting a transmission configuration indicator (TCI) configuration for N TCI-states for physical downlink shared channel (PDSCH) receptions, N being an integer greater than 1 and each of the N TCI-states including information on a downlink reference signal and quasi co-locate (QCL) information;
transmitting an activation command for M TCI-states among the N TCI-states, the TCI-states being divided into G TCI groups and M being a positive integer less than N;
transmitting a physical downlink control channel (PDCCH) carrying downlink control information (DCI) scheduling the PDSCH, the DCI including TCI group information on one of the G TCI groups;
determining a TCI-state for the PDSCH among the TCI-states within the TCI group indicated by the TCI group information within the DCI; and
transmitting the PDSCH based on the determined TCI-state.
